(19) **Europäisches Patentamt** / **European Patent Office** / **Office européen des brevets**

(11) **EP 3 432 102 A1**

(12) **EUROPEAN PATENT APPLICATION**

(43) Date of publication:
23.01.2019 Bulletin 2019/04

(51) Int Cl.:
*G05B 19/408* [(2006.01)]    *G05B 13/04* [(2006.01)]

(21) Application number: 18156743.9

(22) Date of filing: 14.02.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 19.07.2017 JP 2017139649

(71) Applicant: OMRON CORPORATION
Kyoto-shi, Kyoto 600-8530 (JP)

(72) Inventors:
• NAMIE, Masaki
KYOTO, 600-8530 (JP)
• INAME, Yukio
KYOTO, 600-8530 (JP)
• MANABE, Mikiko
KYOTO, 600-8530 (JP)

(74) Representative: Ter Meer Steinmeister & Partner
Patentanwälte mbB
Nymphenburger Straße 4
80335 München (DE)

(54) **CONTROL DEVICE, METHOD OF CONTROLLING CONTROL DEVICE, INFORMATION PROCESSING PROGRAM, AND RECORDING MEDIUM**

(57)    A control device, a method of controlling the control device, information processing program and recording medium are provided. An adherence performance of all of a plurality of servo control systems is improved. A controller (10) predicts a response of a first servo control system (20) corresponding to a corrected trajectory (SPf) and corrects a first command value (Pc) or generates a second inverse kinematics trajectory (IKt) using the predicted response.

FIG. 1

**Description**

BACKGROUND

Technical Field

The disclosure relates to a control device configured to output a command value to a feedback control system such as a servo driver and the like.

Related Art

There is a known control device through which, for a plurality of servo control systems, a command trajectory is generated for each of the servo control systems from a target trajectory, the command value generated from the command trajectory is output to the plurality of servo control systems for each of control periods, and the plurality of servo control systems are controlled in cooperation.

For example, US Pub. No. 2012/0095599 discloses a control device through which (1) a first trajectory generated when low pass filter processing is performed on a result of inverse kinematics calculation on a target trajectory is set as a command trajectory for a first servo control system, and (2) a command trajectory for a second servo control system is generated from an error between a result of direct kinematics calculation on the first trajectory and the target trajectory. Here, in the following description, reverse kinematics will be referred to as "inverse kinematics" and direct kinematics will be referred to as "forward kinematics."

SUMMARY

However, in the related art described above, when the first servo control system cannot sufficiently adhere to the trajectory after low pass filter processing, there is a problem that an adherence performance (adherence accuracy) of all of the plurality of servo control systems may deteriorate. Specifically, in the related art described above, the first servo control system is assumed to be able to sufficiently adhere to the trajectory after low pass filter processing. In the related art described above, when an assumption that the first servo control system can sufficiently adhere to the trajectory after low pass filter processing is not met, there is a problem of sufficient performance not being obtained in the adherence performance of both of the first servo control system and the second servo control system.

An aspect of the disclosure improves an adherence performance of all of a plurality of servo control systems in a control device configured to control the plurality of servo control systems in cooperation and the like.

According to an aspect of the disclosure, there is provided a control device configured to generate a first command trajectory in which a high frequency component is removed from a reference trajectory by low pass filter processing as a command trajectory of a first servo control system and to generate a second command trajectory including a trajectory corresponding to the high frequency component as a command trajectory of a second servo control system. The control device includes a prediction unit configured to predict a response of the first servo control system corresponding to the first command trajectory using a dynamic characteristics model of the first servo control system; and a generation unit configured to perform (1) correcting a first command value generated from the first command trajectory or (2) generating the second command trajectory, by using the response of the first servo control system predicted by the prediction unit.

According to the above configuration, the control device predicts a response of the first servo control system corresponding to the first command trajectory which is a value after the low pass filter processing using the dynamic characteristics model of the first servo control system. Then, the control device (1) corrects the first command value or (2) generates the second command trajectory using the predicted response of the first servo control system.

Here, when the first servo control system cannot sufficiently adhere to the trajectory after low pass filter processing, as a result, an adherence performance of both of the first servo control system and the second servo control system deteriorates.

On the other hand, the control device predicts a response of the first servo control system corresponding to the first command trajectory, and (1) corrects the first command value or (2) generates the second command trajectory using the predicted response of the first servo control system.

For example, when the control device outputs the first command value corrected using the predicted response of the first servo control system to the first servo control system, the adherence performance of the first servo control system with respect to the first command trajectory is improved.

In addition, for example, when the control device outputs the second command value generated from the second command trajectory generated using the predicted response of the first servo control system to the second servo control system, an adherence delay of the first servo control system is compensated for in the second servo control system.

Therefore, the control device has an effect that it is possible to improve an adherence performance of both of the first servo control system and the second servo control system. For example, when the control device outputs the first command value corrected using the predicted response of the first servo control system to the first servo control system, it is possible to improve an adherence performance of the first servo control system. In addition, for example, when the control device outputs the second command value generated from the second command trajectory generated using the predicted response of the first servo control system to the second servo control system, even if the first servo control system cannot adhere to the first command trajectory, it is possible to compensate for an extent to which the first servo control system cannot adhere to in the second servo control system. Therefore, the control device has an effect that it is possible to improve an adherence performance of both of the first servo control system and the second servo control system.

In the control device according to the disclosure, the prediction unit may predict a control amount which is an output of the first servo control system with respect to the first command value using the dynamic characteristics model of the first servo control system. The generation unit may correct the first command value according to model predictive control using the control amount predicted by the prediction unit and a measured value of a control amount of the first servo control system acquired as feedback information from the first servo control system.

According to the above configuration, the control device corrects the first command value according to the model predictive control using the control amount of the first servo control system predicted using the dynamic characteristics model of the first servo control system and a measured value of a control amount of the first servo control system.

Therefore, when the control device outputs the first command value corrected using the model predictive control to the first servo control system, it is possible to improve an adherence performance of the first command trajectory of the first servo control system after the low pass filter processing. That is, the control device has an effect that it is possible to improve an adherence performance of both of the first servo control system and the second servo control system.

In the control device according to the disclosure, the generation unit may generate the second command trajectory including a trajectory corresponding to an error between an intermediate trajectory and the reference trajectory, and wherein the intermediate trajectory is generated using the response of the first servo control system predicted by the prediction unit.

According to the above configuration, the control device predicts a response of the first servo control system corresponding to the first command trajectory and generates the second command trajectory including a trajectory corresponding to an error between an intermediate trajectory generated using the predicted response and the reference trajectory. Then, the control device outputs the command value (the second command value) generated from the second command trajectory to the second servo control system.

Therefore, when the control device outputs the second command value generated from the second command trajectory generated using the predicted response of the first servo control system to the second servo control system, it is possible to compensate for an adherence delay of the first servo control system in the second servo control system. That is, the control device has an effect that it is possible to improve an adherence performance of both of the first servo control system and the second servo control system.

The control device according to the disclosure may further include a filter unit configured to perform the low pass filter processing on the reference trajectory in both directions of a forward direction and a reverse direction of the time axis and generate the first command trajectory.

According to the above configuration, the control device performs the low pass filter processing on the reference trajectory in both directions of a forward direction and a reverse direction of the time axis and generates the first command trajectory. For example, the control device performs the low pass filter processing on the reference trajectory in order from a reverse direction to a forward direction of the time axis and generates the first command trajectory.

Here, it is known that, when filter processing (for example, low pass filter processing) is "performed once each in a forward direction and a reverse direction of the time axis," it is possible to remove a phase lag due to filter processing. That is, it is known that it is possible to remove a phase lag according to zero phase filter processing.

Therefore, the control device performs low pass filter processing on the reference trajectory in both directions of a forward direction and a reverse direction of the time axis, that is, performs zero phase filter processing, and removes a phase lag from the first command trajectory. The control device generates the first command trajectory without generating a "phase lag from the reference trajectory" that is generated conventionally due to the low pass filter.

In the related art, when low pass filter processing is performed to improve adherence of the first servo control system, a phase lag (phase delay) occurs in the first trajectory due to the low pass filter processing and the generated phase delay is compensated for in the second servo control system. Therefore, in the related art, instead of improving adherence of the first servo control system, a part of a trajectory that was initially intended to be realized by the first servo control system is realized in the second servo control system. Therefore, it was not possible to effectively use the range of movement of the second servo control system.

On the other hand, since the control device prevents the occurrence of "a phase lag from the reference trajectory" that is generated conventionally according to removal of the high frequency component, it is not necessary to compensate for a part of a trajectory that was initially intended to be realized by the first servo control system in the second servo control system. That is, the control device prevents the occurrence of a phase delay while maintaining adherence of the first servo control system according to removal of the high frequency component, and thus can effectively use the range of movement of the second servo control system. The control device has an effect that it is possible to effectively use ranges of movement of the first servo control system and the second servo control system while maintaining adherence of the first servo control system.

In the control device according to the disclosure, the filter unit may perform the low pass filter processing on the reference trajectory in order from a reverse direction to a forward direction of the time axis and generate the first command trajectory.

According to the above configuration, the control device performs the low pass filter processing on the reference trajectory in order from a reverse direction to a forward direction of the time axis and generates the first command trajectory.

Here, when the low pass filter processing (the zero phase filter processing) is performed on the reference trajectory in order from a forward direction to a reverse direction of the time axis, a data jump occurs in the first command trajectory at a start time (at a time of t=0) with respect to the reference trajectory.

On the other hand, the control device performs the low pass filter processing on the reference trajectory in order from a reverse direction to a forward direction of the time axis and generates the first command trajectory. Therefore, the control device has an effect that it is possible to prevent a data jump from occurring in the first command trajectory at a start time (at a time of t=0) with respect to the reference trajectory.

According to an aspect of the disclosure, there is provided a control method of a control device configured to generate a first command trajectory in which a high frequency component is removed from a reference trajectory by low pass filter processing as a command trajectory of a first servo control system and to generate a second command trajectory including a trajectory corresponding to the high frequency component as a command trajectory of a second servo control system. The control method includes a prediction step of predicting a response of the first servo control system corresponding to the first command trajectory using a dynamic characteristics model of the first servo control system; and a generation step of (1) correcting a first command value generated from the first command trajectory or (2) generating the second command trajectory, by using the response of the first servo control system predicted in the prediction step.

According to the above method, in the control method, a response of the first servo control system corresponding to the first command trajectory which is a value after the low pass filter processing is predicted using the dynamic characteristics model of the first servo control system. Then, in the control method, (1) the first command value is corrected or (2) the second command trajectory is generated using the predicted response of the first servo control system.

Here, when the first servo control system cannot sufficiently adhere to the trajectory after low pass filter processing, as a result, an adherence performance of both of the first servo control system and the second servo control system deteriorates.

On the other hand, in the control method, a response of the first servo control system corresponding to the first command trajectory is predicted, and (1) the first command value is corrected or (2) the second command trajectory is generated using the predicted response of the first servo control system.

For example, in the control method, when the first command value corrected using the predicted response of the first servo control system is output to the first servo control system, an adherence performance of the first servo control system with respect to the first command trajectory is improved.

In addition, for example, in the control method, when the second command value generated from the second command trajectory generated using the predicted response of the first servo control system is output to the second servo control system, an adherence delay of the first servo control system is compensated for in the second servo control system.

Therefore, the control method has an effect that it is possible to improve an adherence performance of both of the first servo control system and the second servo control system. For example, in the control method, when the first command value corrected using the predicted response of the first servo control system is output to the first servo control system, it is possible to improve an adherence performance of the first servo control system. In addition, for example, in the control method, when the second command value generated from the second command trajectory generated using the predicted response of the first servo control system is output to the second servo control system, even if the first servo control system cannot adhere to the first command trajectory, it is possible to compensate for an extent to which the first servo control system cannot adhere in the second servo control system. Therefore, the control method has an effect that it is possible to improve an adherence performance of both of the first servo control system and the second servo control system.

According to an aspect of the disclosure, there is an effect that, in a control device configured to control a plurality of servo control systems in cooperation, it is possible to improve an adherence performance of all of the plurality of servo control systems.

## BRIEF DESCRIPTION OF THE DRAWINGS

FIG. 1 is a block diagram showing a main part configuration and the like of a controller and the like according to Embodiment 1 of the disclosure.

FIG. 2 is a diagram showing a general overview of a control system including the controller in FIG. 1.

FIG. 3 is a flowchart showing an overview of processes performed by the controller in FIG. 1.

FIGs. 4(A) and 4(B) are diagrams showing details of a control test performed using the control system in FIG. 2 and the like.

FIGs. 5(A) and 5(B) are diagrams showing changes in positions, position deviations, and torques of a first actuator and a second actuator controlled by the controller in FIG. 1 in the control test shown in FIGs. 4(A) and 4(B).

FIGs. 6(A) and 6(B) are diagrams showing all positions and changes in position deviations of the first actuator and the second actuator controlled by the controller in FIG. 1 in the control test shown in FIGs. 4(A) and 4(B).

FIG. 7 is a block diagram showing a main part configuration and the like of a controller and the like according to Embodiment 2 of the disclosure.

FIG. 8 is a diagram showing a general overview of a control system including the controller in FIG. 7.

FIG. 9 is a flowchart showing an overview of processes performed by the controller in FIG. 7.

FIGs. 10(A) and 10(B) are diagrams showing changes in positions, position deviations, and torques of a first actuator and a second actuator controlled by the controller in FIG. 7 in the control test shown in FIGs. 4(A) and 4(B).

FIGs. 11(A) and 11(B) are diagrams showing all positions and changes in position deviation of a first actuator and a second actuator controlled by the controller in FIG. 7 in the control test shown in FIGs. 4(A) and 4(B).

FIG. 12 is a block diagram showing a main part configuration and the like of a controller and the like according to Embodiment 3 of the disclosure.

FIG. 13 is a diagram showing a general overview of a control system including the controller in FIG. 12.

FIG. 14 is a flowchart showing an overview of processes performed by the controller in FIG. 12.

FIGs. 15(A) and 15(B) are diagrams showing changes in positions, position deviations, model prediction errors, and torques of a first actuator and a second actuator controlled by the controller in FIG. 12 in the control test shown in FIGs. 4(A) and 4(B).

FIGs. 16(A) and 16(B) are diagrams showing all positions and changes in position deviations of the first actuator and the second actuator controlled by the controller in FIG. 12 in the control test shown in FIGs. 4(A) and 4(B).

FIG. 17 is a block diagram showing a main part configuration and the like of a controller and the like according to Embodiment 4 of the disclosure.

FIG. 18 is a diagram showing a general overview of a control system including the controller in FIG. 17.

FIG. 19 is a flowchart showing an overview of processes performed by the controller in FIG. 17.

FIGs. 20(A)~20(C) are diagrams explaining a phase delay and a data jump generated according to a method of removing a high frequency component.

FIGs. 21(A) and 21(B) are diagrams showing changes in positions, position deviations, model prediction errors, and torques of a first actuator and a second actuator controlled by the controller in FIG. 17 in the control test shown in FIGs. 4(A) and 4(B).

FIGs. 22(A) and 22(B) are diagrams showing all positions and changes in position deviations of the first actuator and the second actuator controlled by the controller in FIG. 17 in the control test shown in FIGs. 4(A) and 4(B).

FIGs. 23(A) and 23(B) are diagrams showing changes in positions, position deviations, and torques of a first actuator and a second actuator controlled by a conventional cooperative control controller in the control test shown in FIGs. 4(A) and 4(B).

FIGs. 24(A) and 24(B) are diagram showing all positions and changes in position deviations of the first actuator and the second actuator controlled by the conventional cooperative control controller in the control test shown in FIGs. 4(A) and 4(B).

## DESCRIPTION OF THE EMBODIMENTS

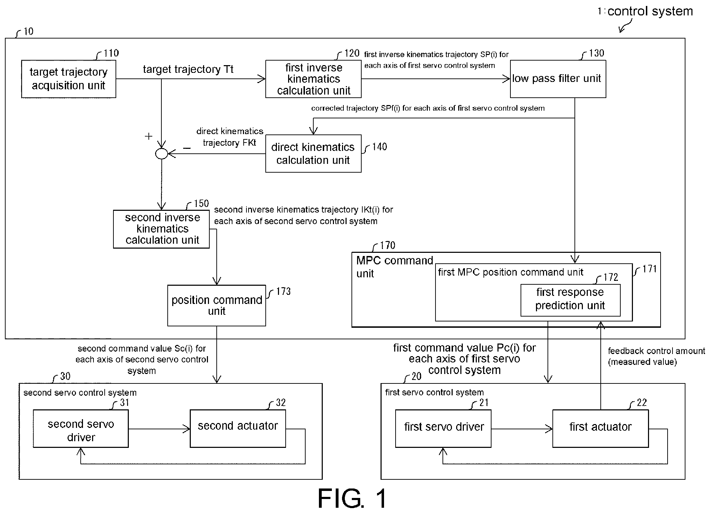

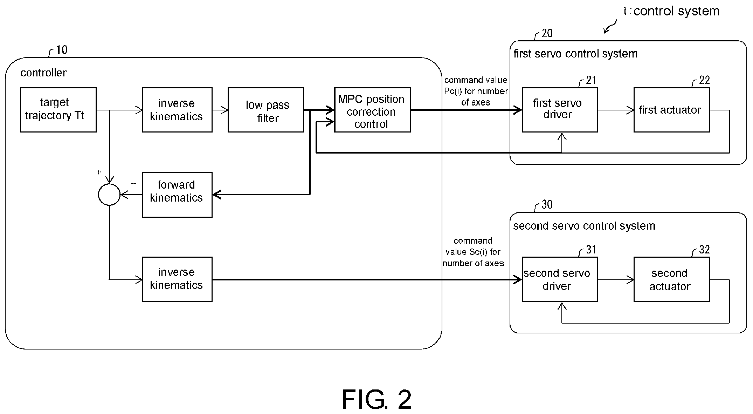

[Embodiment 1] Embodiment 1 of the disclosure will be described below in detail with reference to FIG. 1 to FIGs. 6(A), 6(B), and FIGs. 23(A), 23(B) and FIGs. 24(A), 24(B). The same components or corresponding components in the drawings are denoted with the same reference numerals and descriptions thereof will not be repeated. In order to facilitate understanding of a controller 10 (control device) according to an aspect of the disclosure, first, an overview of a control system 1 including the controller 10 will be described with reference to FIG. 2.

(Overview of control system)

FIG. 2 is a diagram showing an overview of the control system 1 including the controller 10. The control system 1 exemplified in FIG. 2 includes the controller 10 serving as a host controller and a first servo control system 20 and a second servo control system 30 that are controlled in cooperation by the controller 10. The first servo control system 20 is a feedback control system that includes a first servo driver 21 and a first actuator 22 whose driving is controlled by the first servo driver 21. Similarly, the second servo control system 30 is a feedback control system that includes a second servo driver 31 and a second actuator 32 whose driving is controlled by the second servo driver 31.

The controller 10 and each of the first servo driver 21 and the second servo driver 31 are communicatively connected and a connection method thereof is an arbitrary wired connection method or wireless connection method.

The first servo driver 21 receives a command value Pc(i) for each axis from the controller 10 and performs feedback control so that an output of the first actuator 22 as a control target for each axis (that is, a control amount for each axis) adheres to the command value Pc(i) for each axis. A control period of the first servo driver 21 is, for example, 1/12 ms.

The first actuator 22 is an actuator having a wider range of movement than the second actuator 32 and having a lower operation speed than the second actuator 32, and is, for example, a servomotor or a stepping motor. The first servo driver 21 drives the first actuator 22 according to the command value Pc from the controller 10. The first servo driver 21 sets the command value Pc from the controller 10 to a target value, sets a measured value as a feedback value, and performs feedback control on the first actuator 22. That is, the first servo driver 21 adjusts a current for driving the first actuator 22 so that the measured value approaches the target value. Here, the first servo driver 21 may be referred to as a servomotor amplifier.

The second servo driver 31 receives a command value Sc(i) for each axis from the controller 10 and performs feedback control so that an output of the second actuator 32 as a control target for each axis (that is, a control amount for each axis) adheres to the command value Sc(i) for each axis. A control period of the second servo driver 31 is, for example, 1/12 ms. However, a control period of 1/12 ms is only an example, and a control period of the second servo driver 31 may be shorter (control cycling may be faster), for example, 10 $\mu$s.

The second actuator 32 is an actuator that can operate at a higher speed than the first actuator 22 and has a narrower range of movement than the first actuator 22, and is, for example, a piezo actuator or a galvano scanner. The second servo driver 31 and the second actuator 32 are communicatively connected to each other, and a connection method thereof may be an arbitrary wired connection method or wireless connection method, and the second servo driver 31 and the second actuator 32 may be connected by, for example, a dedicated cable. The second servo driver 31 drives the second actuator 32 according to the command value Sc from the controller 10. The second servo driver 31 sets the command value Sc from the controller 10 as a target value and sets a measured value as a feedback value, and performs feedback control on the second actuator 32. That is, the second servo driver 31 adjusts a current for driving the second actuator 32 so that the measured value approaches the target value. Here, the second servo driver 31 may be referred to as a servomotor amplifier.

Here, as described above, the second actuator 32 can operate at a higher speed than the first actuator 22. In the following description, the second actuator 32 will be referred to as a "high speed actuator" and the first actuator 22 will be referred to as a "low speed actuator."

The controller 10 controls the entire control system 1 including the first servo control system 20 and the second servo control system 30, and is, for example, a programmable logic controller (PLC). The controller 10 performs the following (process 1) and (process 2) and thus controls the first servo control system 20 and the second servo control system 30 in cooperation.

(Process 1) The controller 10 generates a command trajectory using a target trajectory Tt for each of the first servo control system 20 and the second servo control system 30. Specifically, the controller 10 generates "a command trajectory of the first servo control system 20" and "a command trajectory of the second servo control system 30" from the target trajectory Tt using inverse kinematics calculation and direct kinematics calculation. That is, the controller 10 performs inverse kinematics calculation on the target trajectory Tt, removes a high frequency component from a generated first inverse kinematics trajectory SP(i) for each axis (not shown) of the first servo control system 20, and generates the corrected trajectory SPf(i) (not shown) as "a command trajectory of the first servo control system 20." Specifically, the controller 10 performs low pass filter processing on the first inverse kinematics trajectory SP(i) and generates the corrected trajectory SPf(i). Here, the first inverse kinematics trajectory SP(i) and the corrected trajectory SPf(i) which are not shown in FIG. 2 will be described below in detail with reference to FIG. 1 and the like.

In addition, the controller 10 generates a second inverse kinematics trajectory IKt(i) (not shown) generated when inverse kinematics calculation is performed on an error between a calculation result of direct kinematics calculation on "a command trajectory of the first servo control system 20" and the target trajectory Tt as "a command trajectory of the second servo control system 30." Here, similarly to the first inverse kinematics trajectory SP(i) and the corrected trajectory SPf(i), the second inverse kinematics trajectory IKt(i) which is not shown in FIG. 2 will be described below in detail with reference to FIG. 1 and the like.

(Process 2) The controller 10 generates command values (a first command value Pc(i) and a second command value Sc(i)) output to the first servo control system 20 and the second servo control system 30 from the command trajectories of the first servo control system 20 and the second servo control system 30. Specifically, the controller 10 generates the first command value Pc(i) from the corrected trajectory SPf(i) and generates the second command value Sc(i) from the second inverse kinematics trajectory IKt(i).

Here, the controller 10 performs model predictive control (MPC) for the first servo control system 20 using a dynamic characteristics model of the first servo control system 20. Specifically, the controller 10 corrects the first command value Pc(i) generated for each control period of the first servo control system 20 from the corrected trajectory SPf(i) according to MPC using the dynamic characteristics model of the first servo control system 20. Then, the controller 10 outputs the corrected first command value Pc(i) to the first servo control system 20.

In addition, the controller 10 outputs the second command value Sc(i) to the second servo control system 30 for each control period of the second servo control system 30.

A control period of the second servo control system 30 of the controller 10 is (faster) than a control period of the first servo control system 20 of the controller 10. Specifically, the control period of the first servo control system 20 of the controller 10, that is, an update period of the first command value Pc(i) output from the controller 10 to the first servo driver 21 is, for example, 1 ms. In addition, a control period of the second servo control system 30 of the controller 10, that is, an update period of the second command value Sc(i) output from the controller 10 to the second servo driver 31 is, for example, 1/12 ms.

For example, the controller 10 corrects the first command value Pc(i) generated from the corrected trajectory SPf(i) every 1 ms according to MPC using the dynamic characteristics model of the first servo control system 20, and outputs the corrected first command value Pc(i) to the first servo driver 21. In addition, for example, the controller 10 outputs the second command value Sc(i) generated every 1/12 ms from the second inverse kinematics trajectory IKt(i) to the second servo driver 31. Here, as described above, control periods of the first servo driver 21 and the second servo driver 31 are, for example, both 1/12 ms. Therefore, the first servo driver 21 performs feedback control on the first actuator 22 with a control period of 1/12 ms using the first command value Pc(i) updated every 1 ms by the controller 10. The second servo driver 31 performs feedback control on the second actuator 32 with a control period of 1/12 ms using the second command value Sc(i) updated every 1/12 ms by the controller 10.

Here, as described above, a control period of the second servo control system 30 of the controller 10 is shorter (control cycling may be faster) than a control period of the first servo control system 20 of the controller 10. Here, in the following description, the first servo control system 20 will be referred to as a "low speed servo control system (low speed servo system)", and the second servo control system 30 will be referred to as a "high speed servo control system (high speed servo system)."

In addition, in the following description, "inverse kinematics calculation" will be referred to as "inverse kinematics processing" and "direct kinematics calculation" will be referred to as "forward kinematics processing." In addition, when the first inverse kinematics trajectory SP, the corrected trajectory SPf, and the command value Pc are values for each "axis" of the first actuator 22, they are represented as the first inverse kinematics trajectory SP(i), the corrected trajectory SPf(i), and the command value Pc(i). The number of axes of the first actuator 22 is "1 to n," that is, "i=1 to n" for the command trajectory SP(i) and the command value Pc(i). Similarly, when the second inverse kinematics trajectory IKt and the command value Sc are values for each "axis" of the second actuator 32, they are represented as the second inverse kinematics trajectory IKt(i) and the command value Sc(i). The number of axes of the second actuator 32 is "1 to m," that is, "i=1 to m" for the second inverse kinematics trajectory IKt(i) and the command value Sc(i). When it is not necessary to separately describe the first inverse kinematics trajectory SP(i), the corrected trajectory SPf(i), command value Pc(i), the second inverse kinematics trajectory IKt(i), and the command value Sc(i) for each axis as values, "(i)" may be omitted in some cases.

(Overview of control device)

Next, a configuration and details of processes of the controller 10 included in the control system 1 of which the overview has been described above with reference to FIG. 2 will be described with reference to FIG. 1 and the like. Before details are described with reference to FIG. 1, in order to facilitate understanding of the controller 10, the overview will be summarized as follows.

The controller 10 (control device) is a control device configured to generate a corrected trajectory SPf (first command trajectory) in which a high frequency component is removed from the first inverse kinematics trajectory SP (reference trajectory) according to low pass filter processing as a command trajectory of the first servo control system 20 and generate a second inverse kinematics trajectory IKt (second command trajectory) including a trajectory corresponding to the high frequency component as a command trajectory of the second servo control system 30. The controller 10 includes a first response prediction unit 172 (prediction unit) configured to predict a response of the first servo control system 20 corresponding to the corrected trajectory SPf using the dynamic characteristics model of the first servo control system 20 and a first MPC position command unit 171 (generation unit) configured to (1) correct the first command value Pc generated from the corrected trajectory SPf or (2) generate a second inverse kinematics trajectory IKt using the response of the first servo control system 20 predicted by the first response prediction unit 172.

According to the above configuration, the controller 10 predicts a response of the first servo control system 20 corresponding to the corrected trajectory SPf which is a value after the low pass filter processing using the dynamic characteristics model of the first servo control system 20. Then, the controller 10 (1) corrects the first command value Pc or (2) generates the second inverse kinematics trajectory IKt using the predicted response of the first servo control system 20. Specifically, the controller 10 corrects the first command value Pc using the predicted response of the first servo control system 20, in other words, generates a first command value Pc according to MPC using the predicted response of the first servo control system 20.

Here, when a conventional controller is used, the first servo control system 20 cannot sufficiently adhere to the trajectory after low pass filter processing (that is, corrected trajectory SPf). In this case, an adherence performance of both of the first servo control system 20 and the second servo control system 30 deteriorates.

On the other hand, the controller 10 predicts a response of the first servo control system 20 corresponding to the corrected trajectory SPf and corrects the first command value Pc using the predicted response of the first servo control system 20. Specifically, the controller 10 correct (generates) the first command value Pc using the predicted response of the first servo control system 20.

For example, when the controller 10 outputs the first command value Pc corrected using the predicted response of the first servo control system 20 to the first servo control system 20, an adherence performance of the first servo control system 20 with respect to the corrected trajectory SPf is improved.

Therefore, the controller 10 has an effect that it is possible to improve an adherence performance of both of the first servo control system 20 and the second servo control system 30. For example, when the controller 10 outputs the first command value Pc corrected using the predicted response of the first servo control system 20 to the first servo control system 20, it is possible to improve an adherence performance of the first servo control system 20. Therefore, the controller 10 has an effect that it is possible to improve an adherence performance of both of the first servo control system 20 and the second servo control system 30.

In the controller 10, the first response prediction unit 172 predicts a control amount which is an output of the first servo control system 20 with respect to a first command value Pc using the dynamic characteristics model of the first servo control system 20 and the first MPC position command unit 171 corrects the first command value Pc according to model predictive control using the control amount predicted by the first response prediction unit 172 and a measured value of a control amount of the first servo control system 20 acquired as feedback information from the first servo control system 20.

According to the above configuration, the controller 10 corrects the first command value Pc according to the model predictive control using the control amount of the first servo control system 20 predicted using the dynamic characteristics model of the first servo control system 20 and the measured value of the control amount of the first servo control system 20.

Therefore, when the controller 10 outputs the first command value Pc corrected using the model predictive control to the first servo control system 20, it is possible to improve an adherence performance of the first servo control system 20 with respect to the corrected trajectory SPf after the low pass filter processing. That is, the controller 10 has an effect that it is possible to improve an adherence performance of both of the first servo control system 20 and the second servo control system 30.

The controller 10 predicts a response of the first actuator 22 (the first servo control system 20) using the dynamic characteristics model of the first servo control system 20 (dynamic characteristics models of the first servo driver 21 and the first actuator 22). Then, the controller 10 computes a response delay with respect to the corrected trajectory SPf(i) and compensates for the computed response delay in the first servo control system 20. Specifically, the controller 10 compensates for a response delay occurring in the first servo control system 20 in the first servo control system 20 by position correction control according to model predictive control using the dynamic characteristics model of the first servo control system 20. The controller 10 can completely compensate for a response delay occurring in the first servo control system 20 in the first servo control system 20. The controller 10 improves an adherence performance of the first servo control system 20 by position correction control according to model predictive control and thus can improve an adherence performance overall (both of the first servo control system 20 and the second servo control system 30).

(Details of control device)

FIG. 1 is a block diagram showing a main part configuration of the controller 10 according to Embodiment 1 of the disclosure. As shown in FIG. 1, the controller 10 includes a target trajectory acquisition unit 110, a first inverse kinematics calculation unit 120, a low pass filter unit 130, a direct kinematics calculation unit 140, a second inverse kinematics calculation unit 150, an MPC command unit 170, and a position command unit 173 as functional blocks.

Here, in order to secure the simplicity of description, components that are not directly related to the present embodiment are omitted in the description and the block diagram. However, according to actual circumstances of realization, the controller 10 may include the omitted components. The functional blocks shown in FIG. 1 can be realized when, for example, a central processing unit (CPU) reads and executes a program stored in a storage device (storage unit which is not shown) realized by a read only memory (ROM), a non-volatile random access memory (NVRAM), or the like in a random access memory (RAM, not shown). The functional blocks in the controller 10 will be described below.

(Details of functional blocks other than storage unit)

The target trajectory acquisition unit 110 receives target trajectory data (the target trajectory Tt) from the outside (for example, a user) and outputs the received target trajectory Tt to the first inverse kinematics calculation unit 120 and the second inverse kinematics calculation unit 150.

The first inverse kinematics calculation unit 120 performs inverse kinematics calculation of the target trajectory Tt acquired from the target trajectory acquisition unit 110 and generates the first inverse kinematics trajectory SP(i) for each axis of the first servo control system 20. The first inverse kinematics calculation unit 120 outputs the generated first inverse kinematics trajectory SP(i) to the low pass filter unit 130.

The low pass filter unit 130 removes a high frequency component from the first inverse kinematics trajectory SP(i) acquired from the first inverse kinematics calculation unit 120 and generates the corrected trajectory SPf(i) for each axis of the first servo control system 20. Specifically, the low pass filter unit 130 performs low pass filter processing on the first inverse kinematics trajectory SP(i) and generates the corrected trajectory SPf(i). A filter type of the low pass filter used by the low pass filter unit 130 is, for example, a fourth-order Butterworth type with a cutoff frequency of 10 Hz.

The low pass filter unit 130 notifies the MPC command unit 170 (in particular, the first MPC position command unit 171) of the generated corrected trajectory SPf(i) as "a command trajectory of the first servo control system 20." The low pass filter unit 130 may store the generated corrected trajectory SPf(i) in a storage unit (not shown). In addition, the low pass filter unit 130 outputs the generated corrected trajectory SPf(i) to the direct kinematics calculation unit 140.

The direct kinematics calculation unit 140 generates a direct kinematics trajectory FKt (intermediate trajectory) from direct kinematics calculation for all of the corrected trajectories SPf(i) ("i=1 to n") acquired from the low pass filter unit 130. The direct kinematics calculation unit 140 outputs the generated direct kinematics trajectory FKt to the second inverse kinematics calculation unit 150.

The second inverse kinematics calculation unit 150 generates a second inverse kinematics trajectory IKt (second command trajectory) including a trajectory corresponding to a high frequency component that is removed from the first inverse kinematics trajectory SP(i) by the low pass filter unit 130 as "a command trajectory of the second servo control system 30."

Specifically, the second inverse kinematics calculation unit 150 generates a second inverse kinematics trajectory IKt including a trajectory corresponding to an error between the first inverse kinematics trajectory SP and the corrected trajectory SPf so that "a combined trajectory of the corrected trajectory SPf and the second inverse kinematics trajectory IKt matches the target trajectory Tt." The second inverse kinematics calculation unit 150 generates a second inverse kinematics trajectory IKt (second command trajectory) including a trajectory corresponding to a high frequency component removed from the first inverse kinematics trajectory SP(i) by the low pass filter unit 130 as "a command trajectory of the second servo control system 30." For example, the second inverse kinematics calculation unit 150 performs inverse kinematics calculation on an "an error between the direct kinematics trajectory FKt acquired from the direct kinematics calculation unit 140 and the target trajectory Tt" and generates the second inverse kinematics trajectory IKt(i) which is a command trajectory of the second servo control system 30 for each axis.

The second inverse kinematics trajectory IKt (second command trajectory) which is a command trajectory of the second servo control system 30 includes a high frequency component that is removed from the first inverse kinematics trajectory SP(i) by the low pass filter unit 130. In addition, the second inverse kinematics trajectory IKt (second command trajectory) satisfies a condition in which "a combined trajectory of a command trajectory (the corrected trajectory SPf) of the first servo control system 20 and a command trajectory (the second inverse kinematics trajectory IKt) of the second servo control system 30 matches the target trajectory Tt." That is, the second inverse kinematics calculation unit 150 may generate a second inverse kinematics trajectory IKt including a trajectory corresponding to an error between the first inverse kinematics trajectory SP and the corrected trajectory SPf so that "a combined trajectory of the corrected trajectory SPf and the second inverse kinematics trajectory IKt matches the target trajectory Tt."

The second inverse kinematics calculation unit 150 notifies the position command unit 173 of the generated second inverse kinematics trajectory IKt(i). The second inverse kinematics calculation unit 150 may store the generated second inverse kinematics trajectory IKt(i) in a storage unit (not shown) as "a command trajectory of the second servo control system 30."

The MPC command unit 170 includes the first MPC position command unit 171 configured to output the first command value Pc(i) (in particular, the corrected first command value Pc(i)) to the first servo control system 20.

The first MPC position command unit 171 includes the first response prediction unit 172. In the first response prediction unit 172, the dynamic characteristics model of the first servo control system 20 created in advance is set. The first response prediction unit 172 may create the dynamic characteristics model of the first servo control system 20 in advance and set the created dynamic characteristics model of the first servo control system 20 therein.

The first MPC position command unit 171 performs the following two processes. First, the first MPC position command unit 171 generates a first command value Pc(i) for each axis of the first servo control system 20 from "a command trajectory of the first servo control system 20" for each control period of the first servo control system 20. For example, the first MPC position command unit 171 acquires the corrected trajectory SPf(i) from the low pass filter unit 130 as "a command trajectory of the first servo control system 20." Then, the first MPC position command unit 171 generates a first command value Pc(i) for each axis of the first servo control system 20 from the corrected trajectory SPf(i), for example, every 1 ms.

Second, the first MPC position command unit 171 corrects the first command value Pc(i) generated for each control period of the first servo control system 20 from the corrected trajectory SPf(i) according to model predictive control and outputs the corrected first command value Pc(i) to the first servo control system 20.

Specifically, the first response prediction unit 172 predicts a control amount which is an output of the first servo control system 20 with respect to the first command value Pc(i) using the set dynamic characteristics model of the first servo control system 20. Then, the first MPC position command unit 171 performs model predictive control using the control amount predicted by the first response prediction unit 172 and the measured value of the control amount of the first servo control system 20 acquired as feedback information from the first servo control system 20. That is, the first MPC position command unit 171 corrects the first command value Pc(i) using "the control amount which is an output of the first servo control system 20" predicted by the first response prediction unit 172 using the dynamic characteristics model of the first servo control system 20 and the measured value of the control amount of the first servo control system 20. Then, the first MPC position command unit 171 outputs the first command value Pc(i) corrected using the model predictive control to the first servo control system 20 for each control period of the first servo control system 20. The first MPC position command unit 171 outputs the corrected first command value Pc(i) to the first servo control system 20, for example, 1 ms.

Here, even if position correction control according to model predictive control (MPC) is not applied, the first command value Pc(i) is generated from the corrected trajectory SPf(i) for each control period of the first servo control system 20, that is, the first command value Pc(i) and the corrected trajectory SPf(i) are different from each other. The first MPC position command unit 171 generates a the first command value Pc(i) according to model predictive control using "the control amount which is an output of the first servo control system 20" predicted by the first response prediction unit 172 and a measured value of the control amount of the first servo control system 20. In other words, the first MPC position command unit 171 corrects "the first command value Pc(i) to be generated from the corrected trajectory SPf(i) when position correction control according to MPC is not applied" by applying the position correction control according to MPC. In the present embodiment, when it is described that the first MPC position command unit 171 "corrects the first command value Pc(i)," it refers to the following concepts. That is, "the first command value Pc(i) to be generated from the corrected trajectory SPf(i) when position correction control according to MPC is not applied" is corrected by the first MPC position command unit 171 by applying position correction control according to MPC. In the following, generating the first command value Pc(i) by MPC using "the control amount which is an output of the first servo control system 20" predicted by the first response prediction unit 172 and the measured value of the control amount of the first servo control system 20 can be expressed as "correcting the first command value Pc(i)."

The position command unit 173 generates a second command value Sc(i) for each axis of the second servo control system 30 from "a command trajectory of the second servo control system 30" for each control period of the second servo control system 30 and outputs the generated second command value Sc(i) to the second servo control system 30. Specifically, the position command unit 173 acquires the second inverse kinematics trajectory IKt(i) from the second inverse kinematics calculation unit 150 as "a command trajectory of the second servo control system 30." Then, the position command unit 173 generates a second command value Sc(i) for each axis of the second servo control system 30 from the second inverse kinematics trajectory IKt(i), for example, every 1/12 ms, and outputs the generated second command value Sc(i) to the second servo control system 30.

(Details of storage unit)

The controller 10 includes a storage unit (not shown). The storage unit is a storage device in which various types of data used by the controller 10 are stored. Here, the storage unit may non-temporarily store (1) a control program executed by the controller 10, (2) an OS program, (3) an application program for executing various functions of the controller 10, and (4) various types of data to be read when the application program is executed. The above (1) to (4) data is stored in a non-volatile storage device, for example, a read only memory (ROM), a flash memory, an erasable programmable ROM (EPROM), an EEPROM (registered trademark) (electrically EPROM), and a hard disc drive (HDD). The controller 10 may include a temporary storage unit (not shown). The temporary storage unit is a so-called working memory in which data used for calculation, a calculation result, and the like during various processes performed by the controller 10 are temporarily stored, and includes a volatile storage device such as a random access memory (RAM). Which data is stored in which storage device is appropriately determined according to the usage purpose of the controller 10, convenience, cost, or physical restrictions.

(Dynamic characteristics model)

The dynamic characteristics model of the first servo control system 20 is represented by, for example, a discrete-time transfer function shown in the following (Formula 1). In (Formula 1), u denotes an input, y denotes an output (a predicted control amount, that is, a predicted value of a control amount), d, $a_1$ to $a_n$ and $b_1$ to $b_m$ denote characteristic parameters, and $z^{-1}$ denotes a delay operator.

dynamic characteristics model example: discrete-time transfer function

$$y = z^{-d}\ \frac{b_1 z^{-1} + b_2 z^{-2} + \ldots + b_m z^{-m}}{1 + a_1 z^{-1} + a_2 z^{-2} + \ldots + a_n z^{-n}}\ u \qquad \text{(Formula 1)}$$

In the controller 10, the dynamic characteristics model of the first servo control system 20 exemplified in (Formula 1) is created in advance, and the created dynamic characteristics model is set in the first response prediction unit 172.

(Processes performed by controller)

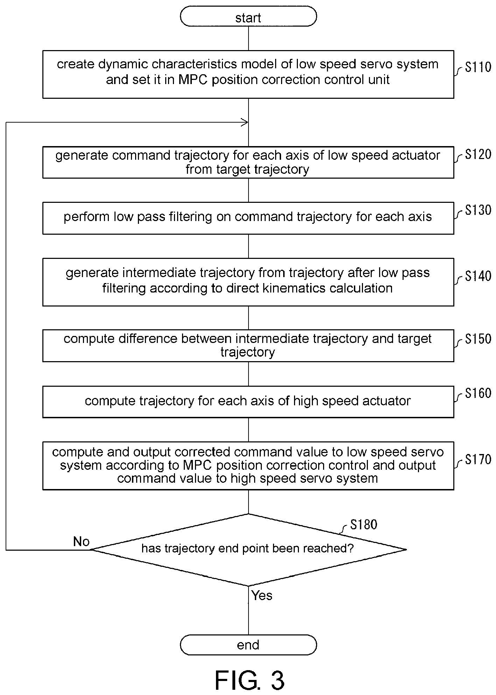

FIG. 3 is a flowchart showing an overview of processes performed by the controller 10. The controller 10 creates the dynamic characteristics model of the first servo control system 20 in advance, and performs MPC position correction control on the side of the low speed actuator (the first actuator 22) using the created dynamic characteristics model of the first servo control system 20. Specifically, the controller 10 corrects the first command value Pc(i) according to MPC using the dynamic characteristics model of the first servo control system 20 and outputs the corrected first command value Pc(i) to the first servo control system 20. Processes performed by the controller 10 will be described below in detail with reference to FIG. 3.

The controller 10 creates a dynamic characteristics model of the low speed servo system (the first servo control system 20) in advance and sets it in the first response prediction unit 172 (S110). The first inverse kinematics calculation unit 120 generates a command value for each axis of the first actuator 22 from the target trajectory Tt, that is, performs inverse kinematics calculation on the target trajectory Tt and generates the first inverse kinematics trajectory SP(i) (S120). The low pass filter unit 130 performs low pass filtering on a trajectory for each axis (that is, the first inverse kinematics trajectory SP(i)) (S130), and generates the corrected trajectory SPf(i). The low pass filter unit 130 notifies the MPC command unit 170 (in particular, the first MPC position command unit 171) of the generated corrected trajectory SPf(i).

The controller 10 computes "a difference between a command value generated from a command trajectory after low pass filtering and a command value of the target trajectory" and generates the command value for each axis of the high speed actuator (the second actuator 32) from the computed difference.

For example, the direct kinematics calculation unit 140 generates an intermediate trajectory (that is, the direct kinematics trajectory FKt) from the trajectory after low pass filtering (that is, the corrected trajectory SPf(i)) according to direct kinematics calculation (S140). Then, the second inverse kinematics calculation unit 150 computes a difference (error) between the intermediate trajectory and the target trajectory Tt (S150). Then, the second inverse kinematics calculation unit 150 generates a trajectory for each axis of the second actuator 32 using the error (difference) computed in S150 (S160). Specifically, the second inverse kinematics calculation unit 150 performs inverse kinematics calculation on "an error between the intermediate trajectory (that is, the direct kinematics trajectory FKt) and the target trajectory Tt" and generates the second inverse kinematics trajectory IKt(i) which is a command trajectory for each axis of the second servo control system 30. The second inverse kinematics calculation unit 150 notifies the position command unit 173 of the generated second inverse kinematics trajectory IKt(i).

Here, as described above, the second inverse kinematics calculation unit 150 may generate a second inverse kinematics trajectory IKt including a trajectory corresponding to an error between the first inverse kinematics trajectory SP and the corrected trajectory SPf. Specifically, the second inverse kinematics calculation unit 150 generates a second inverse kinematics trajectory IKt including a trajectory corresponding to an error between the first inverse kinematics trajectory SP and the corrected trajectory SPf so that "a combined trajectory of the corrected trajectory SPf and the second inverse kinematics trajectory IKt matches the target trajectory Tt." The second inverse kinematics calculation unit 150 generates a second inverse kinematics trajectory IKt (second command trajectory) including a trajectory corresponding to a high frequency component removed from the first inverse kinematics trajectory SP(i) by the low pass filter unit 130 as "a command trajectory of the second servo control system 30."

The controller 10 computes a corrected command value for the low speed servo system (the first servo control system 20) according to MPC position correction control using the dynamic characteristics model of the first servo control system 20, and outputs the computed and corrected command value to the low speed servo system. In addition, the controller 10 computes a command value of the high speed servo system (the second servo control system 30) and outputs the computed command value to the high speed servo system (S170).

Specifically, the first MPC position command unit 171 corrects the first command value Pc(i) generated from the corrected trajectory SPf(i) for each control period of the first servo control system 20 according to MPC using the dynamic characteristics model of the first servo control system 20. That is, the first MPC position command unit 171 corrects the first command value Pc(i) using "the control amount which is an output of the first servo control system 20" predicted by the first response prediction unit 172 using the dynamic characteristics model of the first servo control system 20 and the measured value of the control amount of the first servo control system 20. Then, the first MPC position command unit 171 outputs the corrected first command value Pc(i) to the first servo control system 20.

The position command unit 173 generates a second command value Sc(i) from the second inverse kinematics trajectory IKt(i) which is "a command trajectory of the second servo control system 30" for each control period of the second servo control system 30 and outputs the generated second command value Sc(i) to the second servo control system 30.

Then, the controller 10 repeats the processes of S120 to S170 for each control period while determining whether a trajectory end point has been reached (S180). Specifically, the controller 10 repeats "a process related to only the first servo control system 20" among the processes of S120 to S170 while determining whether a trajectory end point has been reached (S180) with a control period of the first servo control system 20. In addition, the controller 10 repeats a process (for example, a process related to the second servo control system 30) other than "a process related to only the first servo control system 20" among the processes of S120 to S170 while determining whether a trajectory end point has been reached (S180) with a control period of the second servo control system 30.

The control method performed by the controller 10 described above with reference to FIG. 3 can be summarized as follows. That is, the control method performed by the controller 10 is a control method of a control device configured to generate a corrected trajectory SPf (first command trajectory) in which a high frequency component is removed from the first inverse kinematics trajectory SP (reference trajectory) according to low pass filter processing as a command trajectory of the first servo control system 20 and generate a second inverse kinematics trajectory IKt (second command trajectory) including a trajectory corresponding to the high frequency component as a command trajectory of the second servo control system 30. The control method includes a prediction step (predicting "a control amount which is an output of the first servo control system 20" by the first response prediction unit 172 using the dynamic characteristics model of the first servo control system 20 in S170) of predicting a response of the first servo control system 20 corresponding to the corrected trajectory SPf using the dynamic characteristics model of the first servo control system 20 and a generation step of (1) correcting the first command value Pc generated from the corrected trajectory SPf or (2) generating the second inverse kinematics trajectory IKt using the response of the first servo control system 20 predicted in the prediction step (correcting the first command value Pc(i) using MPC by the first MPC position command unit 171 in S170).

According to the above method, in the control method, a response of the first servo control system 20 corresponding to the corrected trajectory SPf which is a value after the low pass filter processing is predicted using the dynamic characteristics model of the first servo control system 20. Then, in the control method, (1) the first command value Pc is corrected or (2) the second inverse kinematics trajectory IKt is generated using the predicted response of the first servo control system 20.

Here, when the first servo control system 20 cannot sufficiently adhere to the trajectory after low pass filter processing, an adherence performance of both of the first servo control system 20 and the second servo control system 30 deteriorates.

On the other hand, in the control method, a response of the first servo control system 20 corresponding to the corrected trajectory SPf is predicted, and (1) the first command value Pc is corrected or (2) the second inverse kinematics trajectory IKt is generated using the predicted response of the first servo control system 20.

For example, in the control method, when the first command value Pc corrected using the predicted response of the first servo control system 20 is output to the first servo control system 20, an adherence performance of the first servo control system 20 with respect to the corrected trajectory SPf is improved.

In addition, for example, in the control method, when the second command value Sc generated from the second inverse kinematics trajectory IKt generated using the predicted response of the first servo control system 20 is output to the second servo control system 30, an adherence delay of the first servo control system 20 is compensated for in the second servo control system 30.

Therefore, the control method has an effect that it is possible to improve an adherence performance of both of the first servo control system 20 and the second servo control system 30. For example, in the control method, when the first command value Pc corrected using the predicted response of the first servo control system 20 is output to the first servo control system 20, it is possible to improve an adherence performance of the first servo control system 20. In addition, for example, in the control method, when the second command value Sc generated from the second inverse kinematics trajectory IKt generated using the predicted response of the first servo control system 20 is output to the second servo control system 30, even if the first servo control system 20 cannot adhere to the corrected trajectory SPf, it is possible to compensate for an extent to which the first servo control system 20 cannot adhere in the second servo control system 30. Therefore, the control method has an effect that it is possible to improve an adherence performance of both of the first servo control system 20 and the second servo control system 30.

(Effects of controller)

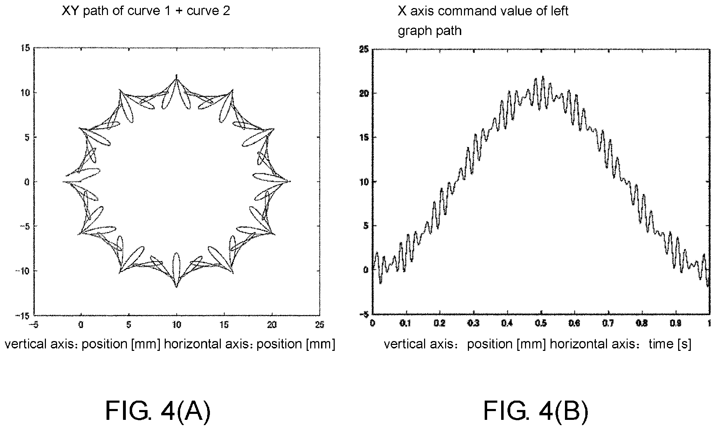

How the controller 10 actually controls the first actuator 22 and the second actuator 32 through the first servo driver 21 and the second servo driver 31 will be described with reference to FIGs. 4(A), 4(B) and the like.

FIGs. 4(A) and 4(B) are diagrams showing details of a control test (control simulation) that is performed using the controller 10 in the control system 1. Control performance (position deviation) in an X axis component of a complex two-dimensional path is compared between the controller 10 and the conventional controller.

Here, the "conventional controller" is a cooperative control controller that does not perform MPC using the dynamic characteristics model of the servo control system. That is, the controller 10 corrects the first command value Pc(i) generated from the corrected trajectory SPf(i) according to MPC using the dynamic characteristics model of the first servo control system 20 and outputs the corrected first command value Pc(i) to the first servo control system 20. On the other hand, the "conventional controller" does not correct the first command value Pc(i) generated from the corrected trajectory SPf(i) for each control period of the first servo control system 20 according to MPC and outputs the first command value Pc(i) to the first servo control system 20 without change. The other points are assumed to be the same between the controller 10 and the conventional controller.

The two-dimensional path used in the control test is obtained by combining the following two curves, a curve 1 and a curve 2, that is, "the curve 1: circle, 1 round in 1 second, a radius of 10 mm," and "the curve 2: folium of Descartes, 1 round in 0.1 seconds , the number of leaves 9, a length of the leaf of 2 mm." In FIG. 4(A), an XY path of the curve 1+the curve 2 is shown. In FIG. 4(A), the vertical axis represents a Y axis position and the horizontal axis represents an X axis position. In FIG. 4(B), an X axis command value of the XY path in FIG. 4(A) is shown. In FIG. 4(B), the vertical axis represents an X axis command value (position), and the horizontal axis represents a time (t). Here, acceleration is assumed to smoothly occur at a constant acceleration for 0.02 s immediately after starting.

Both the first actuator 22 and the second actuator 32 have two axes X and Y. Control periods of the first servo driver 21 and the second servo driver 31 are both 1/12 ms. That is, a control period of the first actuator 22 of the first servo driver 21 is 1/12 ms, and a control period of the second actuator 32 of the second servo driver 31 is 1/12 ms. In addition, a control period of the controller 10, that is, an update period of a command value of each of the first servo driver 21 (the low speed servo control system) and the second servo driver 31 (the high speed servo control system) of the controller 10 is 1 ms on the low speed side and 1/12 ms on the high speed side.

(Control of position and the like by conventional controller)

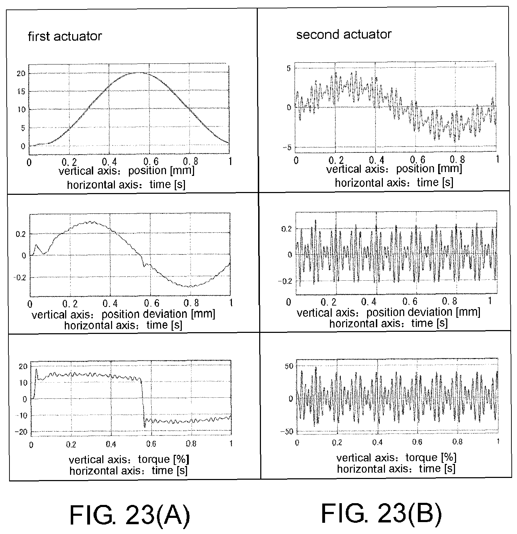

FIGs. 23(A) and 23(B) are diagrams showing changes in positions, position deviations, and torque in the first actuator 22 and the second actuator 32 controlled by a conventional cooperative control controller in the control test shown in FIGs. 4(A) and 4(B). FIG. 23(A) shows changes in position, position deviation, and torque of the first actuator 22 controlled by the conventional controller in order from the top. FIG. 23(B) shows changes in position, position deviation, and torque of the second actuator 32 controlled by the conventional controller in order from the top. In all of the drawings shown in FIGs. 23(A) and 23(B), the horizontal axis represents a time (t).

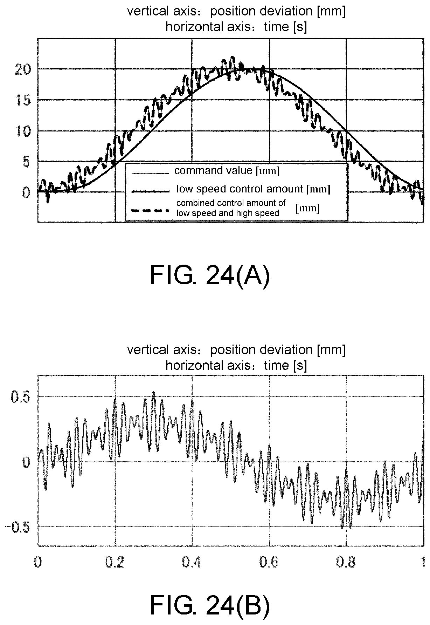

FIGs. 24(A) and 24(B) are diagrams showing all positions (FIG. 24(A)) and changes in position deviations (FIG. 24(B)) of the first actuator 22 and the second actuator 32 controlled by the conventional cooperative control controller in the control test shown ins FIGs. 4(A) and 4(B). In all of the drawings shown in FIGs. 24(A) and 24(B), the horizontal axis represents a time (t). Here, in FIG. 24(A), a command value and a combined control amount of low speed and high speed (a value obtained by adding (combining) a measured value of a control amount of the first actuator 22 and a measured value of a control amount of the second actuator 32) almost overlap.

In the "conventional cooperative control controller" whose results of the control test (control simulation) are shown in FIGs. 23(A), 23(B) and FIGs. 24(A) and 24(B), the low pass filter type is a fourth-order Butterworth type with a cutoff frequency of 10 Hz. As described above, the "conventional cooperative control controller" is the same as the controller 10 except that "the first command value Pc(i) generated from the corrected trajectory SPf(i) is not corrected by MPC but is output to the first servo control system 20 without change." As shown in FIG. 24(B), when the "conventional controller" is used, a peak deviation (a peak of an adherence error of all (both) of the first actuator 22 and the second actuator 32) is about plus or minus 0.5 mm.

(Control of position and the like by controller 10)

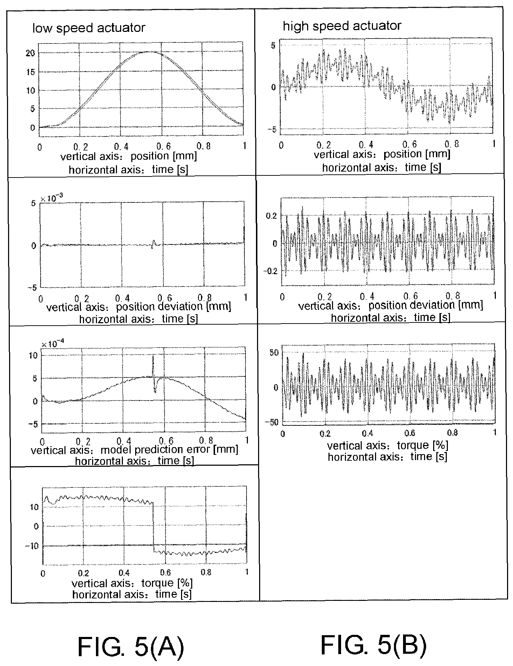

FIGs. 5(A) and 5(B) are diagrams showing changes in positions, position deviations, and torques of the first actuator 22 and the second actuator 32 controlled by the controller 10 in the control test shown in FIGs. 4(A) and 4(B). FIG. 5(A) shows changes in position, position deviation, model prediction error, and torque of the first actuator 22 controlled by the controller 10 in order from the top. FIG. 5(B) shows changes in position, position deviation, model prediction error, and torque of the second actuator 32 controlled by the controller 10 in order from the top. In all of the drawings shown in FIGs. 5(A) and 5(B), the horizontal axis represents a time (t).

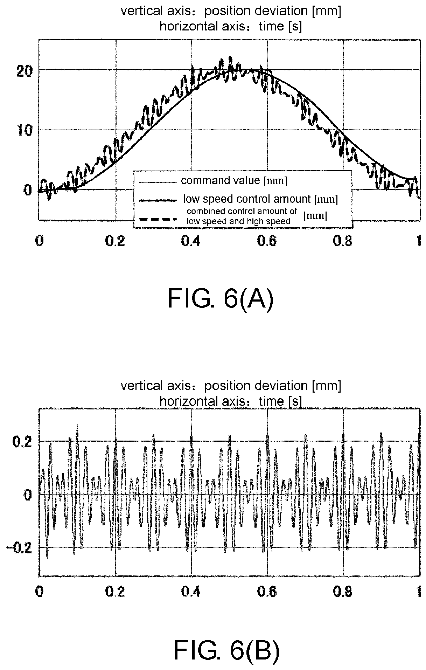

FIGs. 6(A) and 6(B) are diagrams showing positions (FIG. 6(A)) and changes in position deviations (FIG. 6(B)) of both of the first actuator 22 and the second actuator 32 controlled by the controller 10 in the control test shown in FIGs. 4(A) and 4(B). In all of the drawings shown in FIGs. 6(A) and 6(B), the horizontal axis represents a time (t). Here, in FIG. 6(A), a command value and a combined control amount of low speed and high speed (a value obtained by adding (combining) a measured value of a control amount of the first actuator 22 and a measured value of a control amount of the second actuator 32) almost overlap.

As described above, the controller 10 performs low pass filter processing on the first inverse kinematics trajectory SP(i) and generates the corrected trajectory SPf(i). The filter type of the low pass filter used in the controller 10 is, for example, a fourth-order Butterworth type with a cutoff frequency of 10 Hz. Then, the controller 10 corrects the first command value Pc(i) generated from the corrected trajectory SPf(i) according to MPC using the dynamic characteristics model of the first servo control system 20 and outputs the corrected first command value Pc(i) to the first servo control system 20. When the controller 10 applies MPC using the dynamic characteristics model of the first servo control system 20 to control the first servo control system 20, an adherence performance of the first servo control system 20 is improved.

Therefore, a peak deviation (a peak of an adherence error of all (both) of the first actuator 22 and the second actuator 32) shown in FIG. 6(B) is reduced to about 1/2 of the peak deviation shown in FIG. 24(B). Specifically, the peak deviation in FIG. 24(B) is about plus or minus 0.5 mm, but the peak deviation in FIG. 6(B) is about plus or minus 0.25 mm. In addition, a peak deviation (a peak of the position deviation of the first actuator 22) on the low speed side shown in the second drawing in FIG. 5(A) is reduced to 1/100 or less of the peak deviation shown in the second drawing in FIG. 23(A).

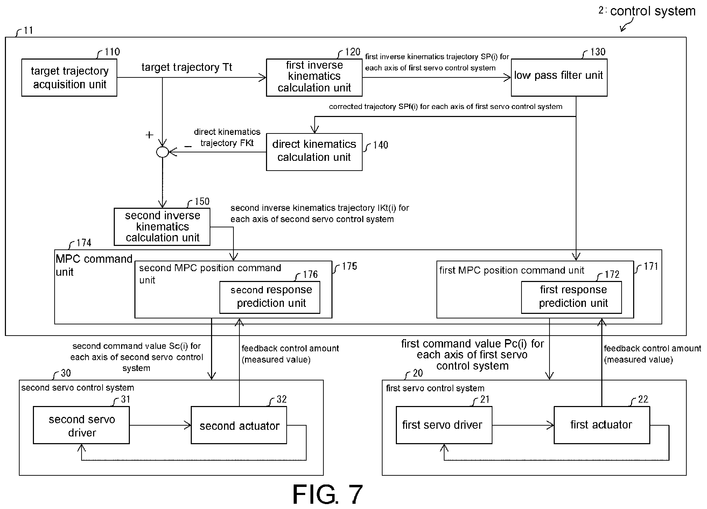

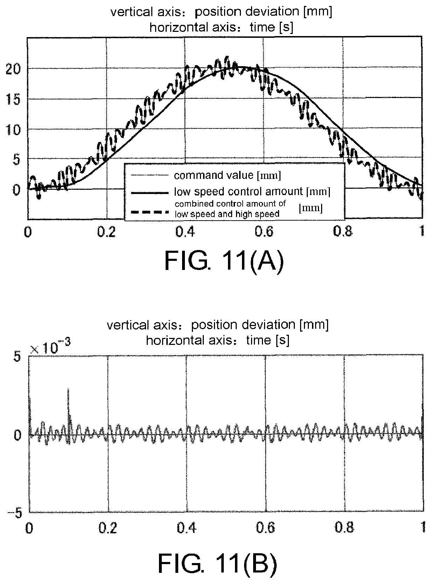

[Embodiment 2] Embodiment 2 of the disclosure will be described below with reference to FIG. 7 to FIGs. 11(A) and 11(B). Here, for convenience of description, components having the same functions as the components described in the above embodiment are denoted with the same reference numerals and descriptions thereof are omitted. A control system 2 in the present embodiment is different from the control system 1 in Embodiment 1 described above in that a controller 11 which is a control device according to the present embodiment includes a second MPC position command unit 175 in place of the position command unit 173 of the controller 10. The configuration of the controller 11 is the same as the configuration of the controller 10 except that "the second MPC position command unit 175 is included in place of the position command unit 173."

(Overview of control system)

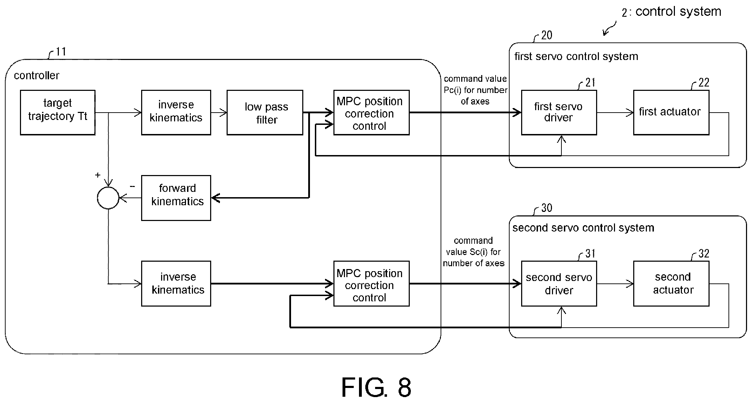

FIG. 8 is a diagram showing a general overview of the control system 2 including the controller 11. The controller 11 of the control system 2 side not only applies MPC position correction control to the low speed actuator (the first servo control system 20) but also applies MPC position correction control to the high speed actuator (the second actuator 32) side. When MPC position correction control is applied to the side of the high speed actuator, the controller 11 reduces an adherence error due to a response delay of the high speed actuator.

Specifically, in the controller 11, the dynamic characteristics model of the low speed servo system (the first servo control system 20) created in advance is set. The controller 11 performs MPC on the first servo control system 20 using the dynamic characteristics model of the first servo control system 20.

In addition, in the controller 11, the dynamic characteristics model of the high speed servo system (the second servo control system 30) created in advance is set. The controller 11 performs MPC on the second servo control system 30 using the dynamic characteristics model of the second servo control system 30. That is, the controller 11 corrects the second command value Sc(i) generated from the second inverse kinematics trajectory IKt(i) for each control period of the second servo control system 30 according to MPC using the dynamic characteristics model of the second servo control system 30. Then, the controller 11 outputs the corrected second command value Sc(i) to the second servo control system 30.

The controller 11 predicts a response delay of the first servo control system 20 using the dynamic characteristics model of the first servo control system 20 and regains the predicted response delay in the first servo control system 20. That is, the controller 11 improves trajectory adherence of the low speed actuator (the first actuator 22) by position correction control according to MPC using the dynamic characteristics model of the first servo control system 20.

In addition, the controller 11 predicts a response delay of the second servo control system 30 using the dynamic characteristics model of the second servo control system 30 and regains the predicted response delay in the second servo control system 30. That is, the controller 11 improves trajectory adherence of the high speed actuator (the second actuator 32) by position correction control according to MPC using the dynamic characteristics model of the second servo control system 30.

(Details of control device)

FIG. 7 is a block diagram showing a main part configuration and the like of the controller 11 and the like according to Embodiment 2 of the disclosure. As described above, since the configuration of the controller 11 is the same as the configuration of the controller 10 except that "the second MPC position command unit 175 is included in place of the position command unit 173," only the second MPC position command unit 175 will be described.

The second MPC position command unit 175 includes a second response prediction unit 176. In the second response prediction unit 176, the dynamic characteristics model of the second servo control system 30 created in advance is set. The second response prediction unit 176 may create the dynamic characteristics model of the second servo control system 30 in advance and set the created dynamic characteristics model of the second servo control system 30 therein.

The second MPC position command unit 175 performs the following two processes. First, the second MPC position command unit 175 generates a second command value Sc(i) for each axis of the second servo control system 30 from "a command trajectory of the second servo control system 30" for each control period of the second servo control system 30. For example, the second MPC position command unit 175 acquires the second inverse kinematics trajectory IKt(i) from the second inverse kinematics calculation unit 150 as "a command trajectory of the second servo control system 30." Then, the second MPC position command unit 175 generates a second command value Sc(i) for each axis of the second servo control system 30 from the second inverse kinematics trajectory IKt(i), for example, every 1/12 ms.

Second, the second MPC position command unit 175 corrects the second command value Sc(i) generated for each control period of the second servo control system 30 from the second inverse kinematics trajectory IKt(i) according to model predictive control and outputs the corrected second command value Sc(i) to the second servo control system 30.

Specifically, the second response prediction unit 176 predicts a control amount which is an output of the second servo control system 30 with respect to the second command value Sc(i) using the set dynamic characteristics model of the second servo control system 30. The second MPC position command unit 175 performs model predictive control using the control amount predicted by the second response prediction unit 176 and the measured value of the control amount of the second servo control system 30 acquired as feedback information from the second servo control system 30. That is, the second MPC position command unit 175 corrects the second command value Sc(i) using "the control amount which is an output of the second servo control system 30" predicted by the second response prediction unit 176 using the dynamic characteristics model of the second servo control system 30 and the measured value of the control amount of the second servo control system 30. Then, the second MPC position command unit 175 outputs the second command value Sc(i) corrected using the model predictive control to the second servo control system 30 for each control period of the second servo control system 30. The second MPC position command unit 175 outputs the corrected second command value Sc(i) to the second servo control system 30, for example, every 1/12 ms.

(Dynamic characteristics model)

The dynamic characteristics model of the second servo control system 30 is represented by the discrete-time transfer function shown in the above (Formula 1). In the controller 11, the dynamic characteristics model of the second servo control system 30 exemplified in (Formula 1) is created in advance and the created dynamic characteristics model is set in the second response prediction unit 176.

(Processes performed by controller)

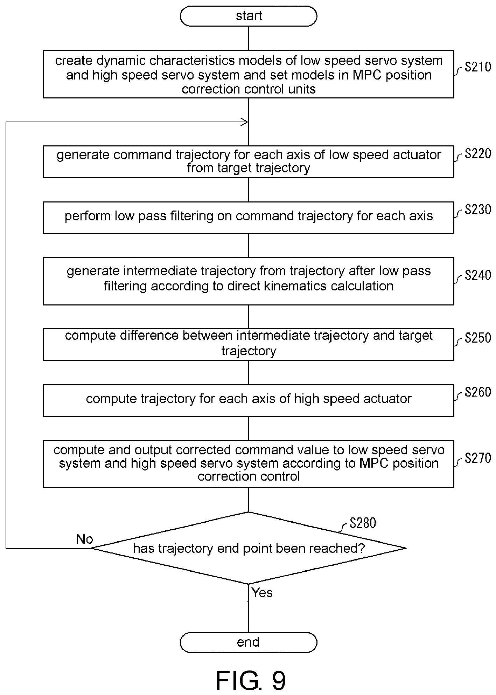

FIG. 9 is a flowchart showing an overview of processes performed by the controller 11. Regarding processes performed by the controller 11 exemplified in FIG. 9, the processes of S220 to S260 are the same as the processes of S120 to S160 performed by the controller 10 exemplified in FIG. 3 and the process of S280 in FIG. 9 is the same as the process of S180 in FIG. 3. Therefore, the processes of S220 to S260, and the process of S280 will not be described and the processes of S210 and S270 will be described.

The controller 11 creates dynamic characteristics models of the low speed servo system (the first servo control system 20) and the high speed servo system (the second servo control system 30) in advance and sets the models in the first response prediction unit 172 and the second response prediction unit 176 (S210).

The controller 11 computes a corrected command value for the low speed servo system according to MPC position correction control using the dynamic characteristics model of the low speed servo system (the first servo control system 20) and outputs the computed and corrected command value to the low speed servo system. In addition, the controller 11 computes a corrected command value for the high speed servo system according to MPC position correction control using the dynamic characteristics model of the high speed servo system (the second servo control system 30), and outputs the computed and corrected command value to the high speed servo system (S270).

Specifically, the first MPC position command unit 171 corrects the first command value Pc(i) generated from the corrected trajectory SPf(i) for each control period of the first servo control system 20 according to MPC using the dynamic characteristics model of the first servo control system 20. That is, the first MPC position command unit 171 corrects the first command value Pc(i) using "the control amount which is an output of the first servo control system 20" predicted by the first response prediction unit 172 using the dynamic characteristics model of the first servo control system 20 and the measured value of the control amount of the first servo control system 20. Then, the first MPC position command unit 171 outputs the corrected first command value Pc(i) to the first servo control system 20.

In addition, the second MPC position command unit 175 corrects the second command value Sc(i) generated from the second inverse kinematics trajectory IKt(i) for each control period of the second servo control system 30 according to MPC using the dynamic characteristics model of the second servo control system 30. That is, the second MPC position command unit 175 corrects the second command value Sc(i) using "the control amount which is an output of the second servo control system 30" predicted by the second response prediction unit 176 using the dynamic characteristics model of the second servo control system 30 and the measured value of the control amount of the second servo control system 30. Then, the second MPC position command unit 175 outputs the second command value Sc(i) corrected using model predictive control to the second servo control system 30.

(Effects of controller)

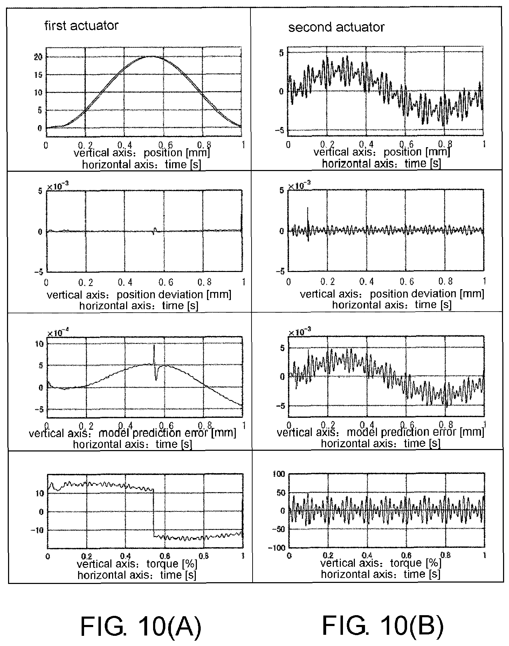

FIGs. 10(A) and 10(B) are diagrams showing changes in positions, position deviations, and torques of the first actuator 22 and the second actuator 32 controlled by the controller 11 in the control test shown in FIGs. 4(A) and 4(B). FIG. 10(A) shows changes in position, position deviation, and torque of the first actuator 22 controlled by the controller 11 in order from the top. FIG. 10(B) shows changes in position, position deviation, and torque of the second actuator 32 controlled by the controller 11 in order from the top. In all of the drawings shown in FIGs. 10(A) and 10(B), the horizontal axis represents a time (t).

FIGs. 11(A) and 11(B) are diagrams showing all positions (FIG. 11(A)) and changes in position deviation (FIG. 11(B)) of the first actuator 22 and the second actuator 32 controlled by the controller 11 in the control test shown in FIGs. 4(A) and 4(B). Here, in FIG. 11(A), a command value and a combined control amount of low speed and high speed (a value obtained by adding (combining) a measured value of a control amount of the first actuator 22 and a measured value of a control amount of the second actuator 32) almost overlap.

As described above, the controller 11 performs low pass filter processing on the first inverse kinematics trajectory SP(i) and generates the corrected trajectory SPf(i). The filter type of the low pass filter used in the controller 11 is, for example, a fourth-order Butterworth type with a cutoff frequency of 10 Hz. Then, the controller 11 corrects the first command value Pc(i) generated from the corrected trajectory SPf(i) according to MPC using the dynamic characteristics model of the first servo control system 20 and outputs the corrected first command value Pc(i) to the first servo control system 20. In addition, the controller 11 corrects the second command value Sc(i) generated from the second inverse kinematics trajectory IKt(i) according to MPC using the dynamic characteristics model of the second servo control system 30 and outputs the corrected second command value Sc(i) to the second servo control system 30.

When the controller 11 applies MPC using the dynamic characteristics model of the first servo control system 20 to control the first servo control system 20, an adherence performance of the first servo control system 20 is improved. In addition, when the controller 11 applies MPC using the dynamic characteristics model of the second servo control system 30 to control the second servo control system 30, an adherence performance of the second servo control system 30 is improved.

Comparing FIGs. 10(A), 10(B) and FIGs. 11(A), 11(B) with FIGs. 5(A), 5(B) and FIGs. 6(A), 6(B), it is shown that, since the controller 11 can also compensate for a response delay on the side of the high speed servo control system (the second servo control system 30), it is possible to significantly improve control performance compared to the controller 10.

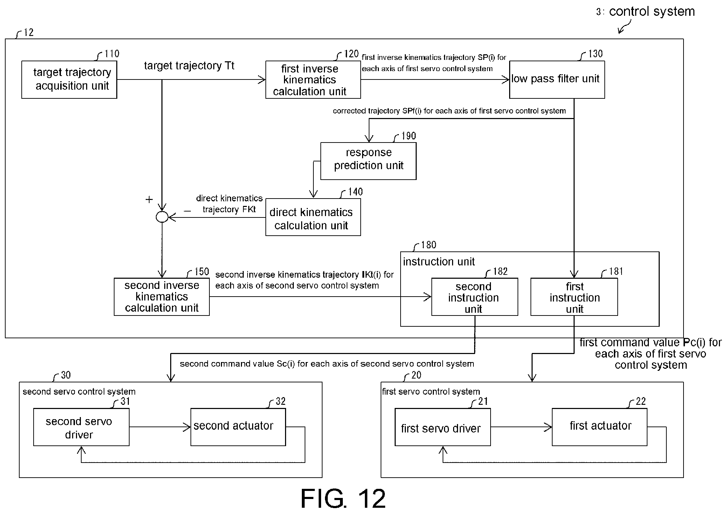

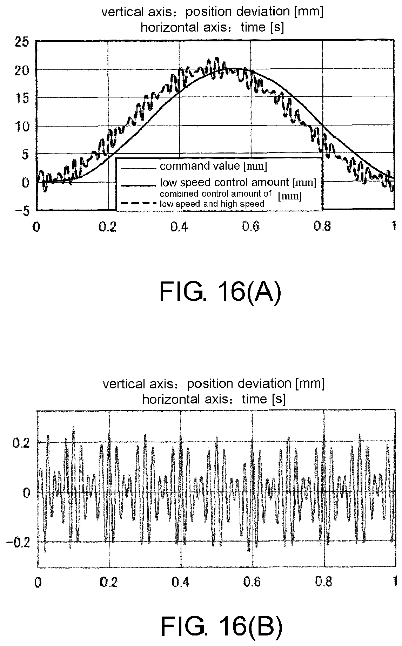

[Embodiment 3] Embodiment 3 of the disclosure will be described below with reference to FIG. 12 to FIGs. 16(A), 16(B). Here, for convenience of description, components having the same functions as the components described in the above embodiment are denoted with the same reference numerals and descriptions thereof are omitted. A control system 3 in the present embodiment is different from the control system 1 in Embodiment 1 described above in that a controller 12 which is a control device according to the present embodiment includes an instruction unit 180 in place of the MPC command unit 170 and the position command unit 173 of the controller 10. The controller 12 further includes a response prediction unit 190 that is not included in the controller 10. The configuration of the controller 12 is the same as the configuration of the controller 10 except that "the instruction unit 180 is included in place of the MPC command unit 170 and the position command unit 173, and the response prediction unit 190 is further included."

(Overview of control system)

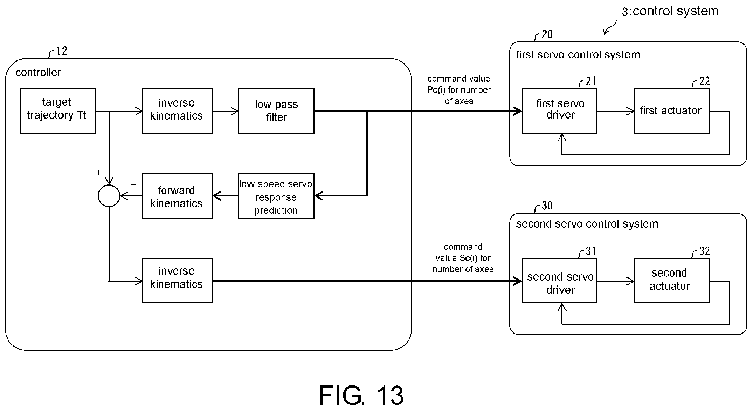

FIG. 13 is a diagram showing a general overview of the control system 3 including the controller 12. In the controller 12 of the control system 3, the dynamic characteristics model of the low speed servo system (the first servo control system 20) created in advance is set. The controller 12 predicts a response of the low speed servo system (that is, the first servo control system 20) corresponding to the corrected trajectory SPf(i) after low pass filter processing using the set dynamic characteristics model of the low speed servo system.

Here, when the controller 12 predicts a response of the low speed servo system (the first servo control system 20), a feedback control amount from the low speed servo system is used in addition to the dynamic characteristics model of the low speed servo system, and thus accuracy of predicting a response of the low speed servo system may be improved.

Here, predicting a response delay using the dynamic characteristics model of the first servo control system 20 is common between the controller 10 and the controller 12 described above. The controller 10 and the controller 12 differ the unit in which the predicted response delay is regained. The controller 10 regains the predicted response delay in the first servo control system 20 and the controller 12 regains the predicted response delay in the second servo control system 30 (the second actuator 32).

The controller 12 predicts a response of the first actuator 22, reflects a response delay in a command trajectory of the second actuator 32, and thus regains the response delay in the second servo control system 30 (the second actuator 32). Specifically, the controller 12 performs inverse kinematics calculation on "an error between an intermediate trajectory generated by performing direct kinematics calculation on the predicted response of the first servo control system 20 and the target trajectory Tt" and generates the command trajectory of the second servo control system 30.

According to the method described above, the controller 12 generates "a command trajectory of the second servo control system 30" in which "the predicted response of the first servo control system 20 (the first actuator 22)" is reflected. Then, the controller 12 generates a second command value Sc(i) which is "a command value of the second servo control system 30" from "a command trajectory of the second servo control system 30" in which "the predicted response of the first servo control system 20" is reflected. When the controller 12 outputs the generated second command value Sc(i) to the second servo control system 30, it is possible to improve an adherence performance of both of the first servo control system 20 and the second servo control system 30.

That is, the controller 12 improves an adherence performance of all (both) of the first actuator 22 and the second actuator 32 by covering a response delay on the side of the first actuator 22 on the side of the second actuator 32. However, control by the controller 12 tends to widen the operation range of the second actuator 32 compared to control by the controller 11.

(Overview of control device)

Next, a configuration and details of processes of the controller 12 included in the control system 3 of which the overview has been described above with reference to FIG. 13 will be described with reference to FIG. 12 and the like. Before details are described with reference to FIG. 12, in order to facilitate understanding of the controller 12, the overview will be summarized as follows.

The controller 12 (control device) is a control device configured to generate a corrected trajectory SPf (first command trajectory) in which a high frequency component is removed from the first inverse kinematics trajectory SP (reference trajectory) according to low pass filter processing as a command trajectory of the first servo control system 20 and generate a second inverse kinematics trajectory IKt (second command trajectory) including a trajectory corresponding to the high frequency component as a command trajectory of the second servo control system 30. The controller 12 includes the response prediction unit 190 (prediction unit) configured to predict a response of the first servo control system 20 corresponding to the corrected trajectory SPf using the dynamic characteristics model of the first servo control system 20 and the second inverse kinematics calculation unit 150 (generation unit) configured to (1) correct the first command value Pc generated from the corrected trajectory SPf or (2) generate the second inverse kinematics trajectory IKt using the response of the first servo control system 20 predicted by the response prediction unit 190.

According to the above configuration, the controller 12 predicts a response of the first servo control system 20 corresponding to the corrected trajectory SPf which is a value after the low pass filter processing using the dynamic characteristics model of the first servo control system 20. Then, the controller 12 (1) corrects the first command value Pc or (2) generates the second inverse kinematics trajectory IKt using the predicted response of the first servo control system 20. Specifically, the controller 12 generates the second inverse kinematics trajectory IKt using the predicted response of the first servo control system 20.

Here, when the conventional controller is used, the first servo control system 20 cannot sufficiently adhere to the trajectory after low pass filter processing (that is, corrected trajectory SPf). In this case, an adherence performance of both of the first servo control system 20 and the second servo control system 30 deteriorates.

On the other hand, the controller 12 predicts a response of the first servo control system 20 corresponding to the corrected trajectory SPf and generates a second inverse kinematics trajectory IKt using the predicted response of the first servo control system 20. Specifically, the controller 12 generates a second inverse kinematics trajectory IKt using the predicted response of the first servo control system 20.

For example, when the controller 12 outputs the second command value Sc generated from the second inverse kinematics trajectory IKt generated using the predicted response of the first servo control system 20 to the second servo control system 30, an adherence delay of the first servo control system 20 is compensated for in the second servo control system 30.

Therefore, the controller 12 has an effect that it is possible to improve an adherence performance of both of the first servo control system 20 and the second servo control system 30. For example, when the controller 12 outputs the second command value Sc generated from the second inverse kinematics trajectory IKt generated using the predicted response of the first servo control system 20 to the second servo control system 30, even if the first servo control system 20 cannot adhere to the corrected trajectory SPf, it is possible to compensate for an extent to which the first servo control system 20 cannot adhere in the second servo control system 30. Therefore, the controller 12 has an effect that it is possible to improve an adherence performance of both of the first servo control system 20 and the second servo control system 30.

In the controller 12, the second inverse kinematics calculation unit 150 generates a second inverse kinematics trajectory IKt including a trajectory corresponding to an error between the direct kinematics trajectory FKt (intermediate trajectory) generated using the response of the first servo control system 20 predicted by the response prediction unit 190 and the first inverse kinematics trajectory SP.

As described above, the second inverse kinematics calculation unit 150 generates a second inverse kinematics trajectory IKt (second command trajectory) including a trajectory corresponding to a high frequency component that is removed from the first inverse kinematics trajectory SP(i) by the low pass filter unit 130 as "a command trajectory of the second servo control system 30." In the controller 12, the second inverse kinematics calculation unit 150 generates a second inverse kinematics trajectory IKt including a trajectory corresponding to an error between the direct kinematics trajectory FKt generated using the "response of the first servo control system 20 predicted by the response prediction unit 190" and the first inverse kinematics trajectory SP. For example, the second inverse kinematics calculation unit 150 generates a second inverse kinematics trajectory IKt from a difference (error) between the direct kinematics trajectory FKt generated when the direct kinematics calculation unit 140 performs direct kinematics calculation on the "predicted response of the first servo control system 20 of the response prediction unit 190" and the target trajectory Tt.

The second inverse kinematics calculation unit 150 may generate a second inverse kinematics trajectory IKt including a trajectory corresponding to an error between the target trajectory Tt and the direct kinematics trajectory FKt (intermediate trajectory) so that "a combined trajectory of the direct kinematics trajectory FKt (intermediate trajectory) and the second inverse kinematics trajectory IKt matches the target trajectory Tt." The second inverse kinematics calculation unit 150 generates a second inverse kinematics trajectory IKt including a trajectory corresponding to an error between the first inverse kinematics trajectory SP and the intermediate trajectory so that "a combined trajectory of the intermediate trajectory and the second inverse kinematics trajectory IKt matches the target trajectory Tt."

According to the above configuration, the controller 12 predicts a response of the first servo control system 20 corresponding to the corrected trajectory SPf and generates a second inverse kinematics trajectory IKt including a trajectory corresponding to an error between the direct kinematics trajectory FKt generated using the predicted response and the first inverse kinematics trajectory SP. Then, the controller 12 outputs the command value (second command value Sc) generated from the second inverse kinematics trajectory IKt to the second servo control system 30.

Therefore, when the controller 12 outputs the second command value Sc generated from the second inverse kinematics trajectory IKt generated using the predicted response of the first servo control system 20 to the second servo control system 30, it is possible to compensate for an adherence delay of the first servo control system 20 in the second servo control system 30. That is, the controller 12 has an effect that it is possible to improve an adherence performance of both of the first servo control system 20 and the second servo control system 30.

(Details of control device)

FIG. 12 is a block diagram showing a main part configuration and the like of the controller 12 and the like according to Embodiment 3 of the disclosure. As described above, since the configuration of the controller 12 is the same as the configuration of the controller 10 except that "the instruction unit 180 is included in place of the MPC command unit 170 and the position command unit 173, and the response prediction unit 190 is further included," only the instruction unit 180 and the response prediction unit 190 will be described.

The instruction unit 180 includes a first instruction unit 181 configured to output the first command value Pc(i) to the first servo control system 20 and a second instruction unit 182 configured to output the second command value Sc(i) to the second servo control system 30.

The first instruction unit 181 generates a first command value Pc(i) for each axis of the first servo control system 20 from "a command trajectory of the first servo control system 20" for each control period of the first servo control system 20 and outputs the generated first command value Pc(i) to the first servo control system 20. Specifically, the first instruction unit 181 acquires the corrected trajectory SPf(i) from the low pass filter unit 130 as "a command trajectory of the first servo control system 20." Then, the first instruction unit 181 generates a first command value Pc(i) for each axis of the first servo control system 20 from the corrected trajectory SPf(i), for example, every 1 ms, and outputs the generated first command value Pc(i) to the first servo control system 20.

The second instruction unit 182 generates a second command value Sc(i) for each axis of the second servo control system 30 from "a command trajectory of the second servo control system 30" for each control period of the second servo control system 30 and outputs the generated second command value Sc(i) to the second servo control system 30. Specifically, the second instruction unit 182 acquires the second inverse kinematics trajectory IKt(i) from the second inverse kinematics calculation unit 150 as "a command trajectory of the second servo control system 30." Then, the second instruction unit 182 generates a second command value Sc(i) for each axis of the second servo control system 30 from the second inverse kinematics trajectory IKt(i), for example, every 1/12 ms, and outputs the generated second command value Sc(i) to the second servo control system 30.

The response prediction unit 190 creates the dynamic characteristics model of the low speed servo system (that is, the first servo control system 20) in advance and predicts a response of the first servo control system 20 corresponding to the corrected trajectory SPf(i) generated by the low pass filter unit 130 using the created dynamic characteristics model. The response prediction unit 190 outputs the predicted response of the first servo control system 20 to the direct kinematics calculation unit 140 and the direct kinematics calculation unit 140 generates a direct kinematics trajectory FKt (intermediate trajectory) from direct kinematics calculation on the response of the first servo control system 20 predicted by the response prediction unit 190. "The dynamic characteristics model of the first servo control system 20" used by the response prediction unit 190 may be represented by a discrete-time transfer function shown in, for example, the above (Formula 1).

(Processes performed by controller)

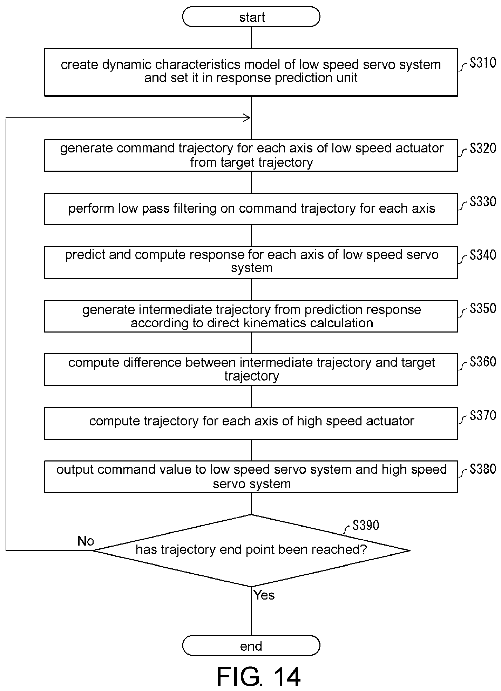

FIG. 14 is a flowchart showing an overview of processes performed by the controller 12. First, a dynamic characteristics model of the low speed servo system (the first servo control system 20) is created and set in a low speed servo response prediction unit (that is, the response prediction unit 190) (S310).

The first inverse kinematics calculation unit 120 generates a command value for each axis of the first actuator 22 from the target trajectory Tt, that is, performs inverse kinematics calculation on the target trajectory Tt, and generates the first inverse kinematics trajectory SP(i) (S320).

The low pass filter unit 130 performs low pass filtering on a trajectory for each axis (that is, the first inverse kinematics trajectory SP(i)) (S330), and notifies the response prediction unit 190 of the generated corrected trajectory SPf(i) as "a command trajectory of the first servo control system 20."

The response prediction unit 190 predicts and computes a response for each axis of the low speed servo system for the corrected trajectory SPf(i) using the dynamic characteristic model of the first servo control system 20, that is, predicts a response of the first servo control system 20 corresponding to the corrected trajectory SPf(i) (S340).

The controller 12 computes "a difference between a predicted response (a predicted value of a control amount of the first servo control system 20) and a command value of the target trajectory" and generates the command value for each axis of the high speed actuator (the second actuator 32) from the computed difference.

For example, the direct kinematics calculation unit 140 performs direct kinematics calculation on the response of the first servo control system 20 predicted by the response prediction unit 190 (a predicted value of a control amount of the first servo control system 20), and generates an intermediate trajectory (that is, the direct kinematics trajectory FKt) (S350). Then, the second inverse kinematics calculation unit 150 computes a difference (error) between the intermediate trajectory and the target trajectory Tt (S360). Then, the second inverse kinematics calculation unit 150 computes a trajectory for each axis of the second actuator 32 using the error (difference) computed in S360 (S370), that is, generates a second inverse kinematics trajectory IKt(i). Specifically, the second inverse kinematics calculation unit 150 performs inverse kinematics calculation on "an error between the intermediate trajectory (that is, the direct kinematics trajectory FKt) and the target trajectory Tt" and generates the second inverse kinematics trajectory IKt(i) which is a command trajectory for each axis of the second servo control system 30. The second inverse kinematics calculation unit 150 generates a second inverse kinematics trajectory IKt including a trajectory corresponding to an error between the direct kinematics trajectory FKt generated from "the response of the first servo control system 20 predicted by the response prediction unit 190" and the first inverse kinematics trajectory SP. For example, the second inverse kinematics calculation unit 150 generates a second inverse kinematics trajectory IKt including a trajectory corresponding to an error between the direct kinematics trajectory FKt (intermediate trajectory) and the first inverse kinematics trajectory SP so that "a combined trajectory of the intermediate trajectory and the second inverse kinematics trajectory IKt matches the target trajectory Tt."

The second inverse kinematics calculation unit 150 notifies the second instruction unit 182 of the generated second inverse kinematics trajectory IKt(i) as "a command trajectory of the second servo control system 30."

The instruction unit 180 outputs a command value at a current time to the low speed servo system (that is, the first servo control system 20) and the high speed servo system (that is, the second servo control system 30) from a trajectory for each axis (the corrected trajectory SPf(i) and the second inverse kinematics trajectory IKt(i)) (S380). Specifically, the first instruction unit 181 generates a first command value Pc(i) from the corrected trajectory SPf(i) notified of by the low pass filter unit 130 for each control period of the first servo control system 20 and outputs the generated first command value Pc(i) to the first servo control system 20.

In addition, the second instruction unit 182 generates a second command value Sc(i) from the second inverse kinematics trajectory IKt(i) notified of by the second inverse kinematics calculation unit 150 for each control period of the second servo control system 30 and outputs the generated second command value Sc(i) to the second servo control system 30.

The controller 12 repeats the processes of S320 to S380 while determining whether a trajectory end point has been reached (S390) for each control period. Specifically, the controller 12 repeats a "process related to only the first servo control system 20 " among the processes of S320 to S380 with a control period of the first servo control system 20 while determining whether a trajectory end point has been reached (S390). In addition, the controller 12 repeats a process (for example, a process related to the second servo control system 30) other than "a process related to only the first servo control system 20" among the processes of S320 to S380 with a control period of the second servo control system 30 while determining whether a trajectory end point has been reached (S390).

The control method performed by the controller 12 described above with reference to FIG. 14 can be summarized as follows. That is, the control method performed by the controller 12 is a control method of a control device configured to generate a corrected trajectory SPf (first command trajectory) in which a high frequency component is removed from the first inverse kinematics trajectory SP (reference trajectory) according to low pass filter processing as a command trajectory of the first servo control system 20 and generate a second inverse kinematics trajectory IKt (second command trajectory) including a trajectory corresponding to the high frequency component as a command trajectory of the second servo control system 30. The control method includes a prediction step (S340) of predicting a response of the first servo control system 20 corresponding to the corrected trajectory SPf using the dynamic characteristics model of the first servo control system 20 and a generation step (S370) of (1) correcting the first command value Pc generated from the corrected trajectory SPf or (2) generating the second inverse kinematics trajectory IKt using the response of the first servo control system 20 predicted in the prediction step.

According to the above method, in the control method, a response of the first servo control system 20 corresponding to the corrected trajectory SPf which is a value after the low pass filter processing is predicted using the dynamic characteristics model of the first servo control system 20. Then, in the control method, (1) the first command value Pc is corrected or (2) the second inverse kinematics trajectory IKt is generated using the predicted response of the first servo control system 20.

Here, when the first servo control system 20 cannot sufficiently adhere to the trajectory after low pass filter processing, an adherence performance of both of the first servo control system 20 and the second servo control system 30 deteriorates.

On the other hand, in the control method, a response of the first servo control system 20 corresponding to the corrected trajectory SPf is predicted, and (1) the first command value Pc is corrected or (2) the second inverse kinematics trajectory IKt is generated using the predicted response of the first servo control system 20.

For example, in the control method, when the first command value Pc corrected using the predicted response of the first servo control system 20 is output to the first servo control system 20, an adherence performance of the first servo control system 20 with respect to the corrected trajectory SPf is improved.

In addition, for example, in the control method, when the second command value Sc generated from the second inverse kinematics trajectory IKt generated using the predicted response of the first servo control system 20 is output to the second servo control system 30, an adherence delay of the first servo control system 20 is compensated for in the second servo control system 30.

Therefore, the control method has an effect that it is possible to improve an adherence performance of both of the first servo control system 20 and the second servo control system 30. For example, in the control method, when the first command value Pc corrected using the predicted response of the first servo control system 20 is output to the first servo control system 20, it is possible to improve an adherence performance of the first servo control system 20. In addition, for example, in the control method, when the second command value Sc generated from the second inverse kinematics trajectory IKt generated using the predicted response of the first servo control system 20 is output to the second servo control system 30, even if the first servo control system 20 cannot adhere to the corrected trajectory SPf, it is possible to compensate for an extent to which the first servo control system 20 cannot adhere in the second servo control system 30. Therefore, the control method has an effect that it is possible to improve an adherence performance of both of the first servo control system 20 and the second servo control system 30.

(Effects of controller)

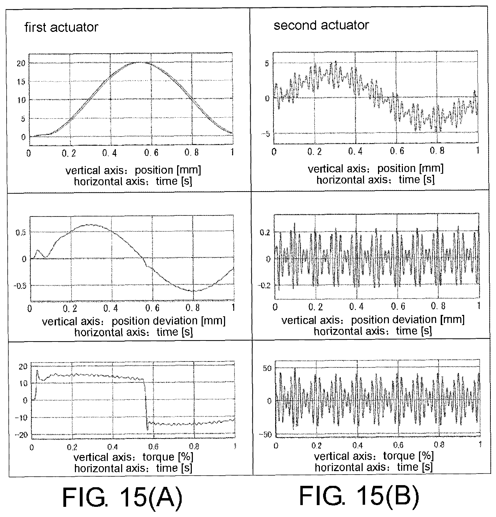

FIGs. 15(A) and 15(B) are diagrams showing changes in positions, position deviations, model prediction errors, and torques of the first actuator 22 and the second actuator 32 controlled by the controller 12 in the control test shown in FIGs. 4(A) and 4(B). FIG. 15(A) shows changes in position, position deviation, model prediction error, and torque of the first actuator 22 controlled by the controller 12 in order from the top. FIG. 15(B) shows changes in position, position deviation, model prediction error, and torque of the second actuator 32 controlled by the controller 12 in order from the top. In all of the drawings shown in FIGs. 15(A) and 15(B), the horizontal axis represents a time (t).

FIGs. 16(A) and 16(B) are diagrams showing all positions (FIG. 16(A)) and changes in position deviation (FIG. 16(B)) of the first actuator 22 and the second actuator 32 controlled by the controller 12 in the control test shown in FIGs. 4(A) and 4(B). In all of the drawings shown in FIGs. 16(A) and 16(B), the horizontal axis represents a time (t). Here, in FIG. 16(A), a command value and a combined control amount of low speed and high speed (a value obtained by adding (combining) a measured value of a control amount of the first actuator 22 and a measured value of a control amount of the second actuator 32) almost overlap.

As described above, the controller 12 performs low pass filter processing on the first inverse kinematics trajectory SP(i) and generates the corrected trajectory SPf(i). The filter type of the low pass filter used in the controller 12 is, for example, a fourth-order Butterworth type with a cutoff frequency of 10 Hz. Here, in favor of response prediction accuracy, the speed FF (feed forward) gain on the side of the low speed servo control system (the first servo control system 20) is set to 0%.

Then, the controller 12 predicts a response of the first servo control system 20 corresponding to the corrected trajectory SPf(i) using the dynamic characteristics model of the first servo control system 20, and generates a second inverse kinematics trajectory IKt(i) using the predicted response of the first servo control system 20. The controller 12 sets a second inverse kinematics trajectory IKt(i) in which a response delay on the side of the first actuator 22 is reflected as "a command trajectory of the second actuator 32," and thus covers a response delay on the side of the first actuator 22 on the side of the second actuator 32.

Therefore, a peak deviation (a peak of an adherence error of all (both) of the first actuator 22 and the second actuator 32) shown in FIG. 16(B) is reduced to about 1/2 of the peak deviation shown in FIG. 24(B). Specifically, the peak deviation in FIG. 24(B) is about plus or minus 0.5 mm, but the peak deviation in FIG. 16(B) is about plus or minus 0.25 mm.

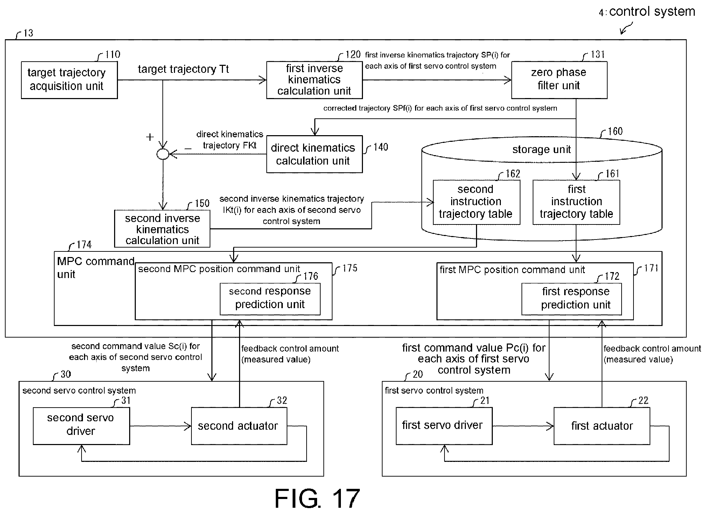

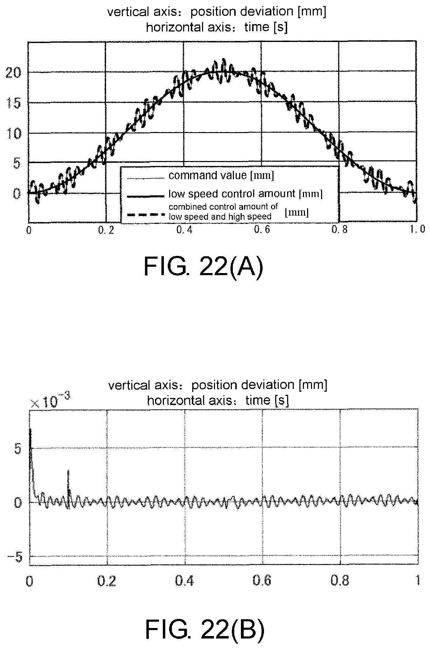

[Embodiment 4] Embodiment 4 of the disclosure will be described below with reference to FIG. 17 to FIGs. 22(A) and 22(B). Here, for convenience of description, components having the same functions as the components described in the above embodiment are denoted with the same reference numerals and descriptions thereof are omitted. A control system 4 in the present embodiment is different from the control system 2 in Embodiment 2 described above in that a controller 13 which is a control device according to the present embodiment includes a zero phase filter unit 131 in place of the low pass filter unit 130 of the controller 11. Additionally, the controller 13 includes a storage unit 160. The configuration of the controller 13 is the same as the configuration of the controller 11 except that "the zero phase filter unit 131 is included in place of the low pass filter unit 130" and "the storage unit 160 is included."

(Overview of control system)

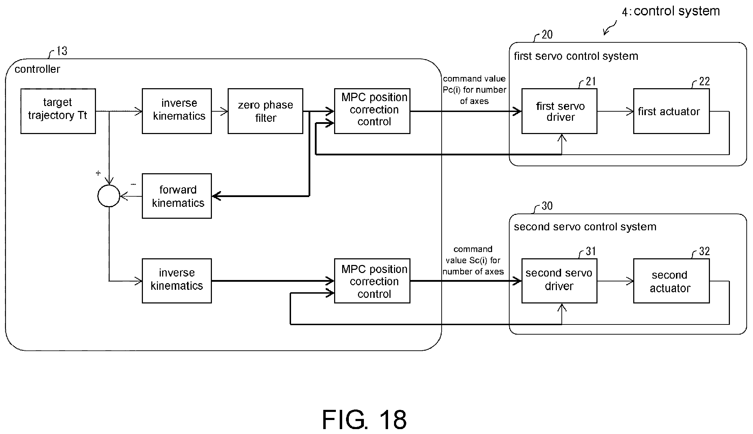

FIG. 18 is a diagram showing a general overview of the control system 4 including the controller 13. Here, the controller 13 removes a high frequency component from the first inverse kinematics trajectory SP(i) so that no phase delay occurs, and generates the corrected trajectory SPf(i). Specifically, the controller 13 performs low pass filter processing on the first inverse kinematics trajectory SP(i) in both directions of a forward direction and a reverse direction of the time axis, that is, performs zero phase filter processing, and generates the corrected trajectory SPf(i). The controller 13 stores the generated corrected trajectory SPf(i) in a memory (specifically, a first instruction trajectory table 161 of a storage unit 160 to be described below).

In addition, the controller 13 is a cooperative control controller configured to predict a response delay of the first servo control system 20 using the dynamic characteristics model of the first servo control system 20 and regain the predicted response delay in the first servo control system 20. That is, the controller 13 improves trajectory adherence of the low speed actuator (the first actuator 22) by position correction control according to model predictive control using the dynamic characteristics model of the first servo control system 20.

Furthermore, the controller 13 improves trajectory adherence of the high speed actuator (the second actuator 32) by position correction control according to model predictive control using the dynamic characteristics model of the second servo control system 30.

(Overview of control device)

The controller 13 includes the low pass filter unit 130 (filter unit) configured to perform the low pass filter processing on the first inverse kinematics trajectory SP in both directions of a forward direction and a reverse direction of the time axis and generate a corrected trajectory SPf.

According to the above configuration, the controller 13 performs the low pass filter processing on the first inverse kinematics trajectory SP in both directions of a forward direction and a reverse direction of the time axis and generates a corrected trajectory SPf. For example, the controller 13 performs the low pass filter processing on the first inverse kinematics trajectory SP in order from a reverse direction to a forward direction of the time axis and generates a corrected trajectory SPf.

Here, it is known that, when filter processing (for example, low pass filter processing) is "performed once each in a forward direction and a reverse direction of the time axis," it is possible to remove a phase lag due to filter processing. That is, it is known that it is possible to remove a phase lag according to zero phase filter processing.

Therefore, the controller 13 performs low pass filter processing on the first inverse kinematics trajectory SP in both directions of a forward direction and a reverse direction of the time axis, that is, performs zero phase filter processing and removes a phase lag from the corrected trajectory SPf. The controller 13 generates a corrected trajectory SPf without generating a "phase lag from the first inverse kinematics trajectory SP" that is generated conventionally due to the low pass filter.

In the related art, when low pass filter processing is performed to improve adherence of the first servo control system 20, a phase lag (phase delay) occurs in the corrected trajectory SPf due to the low pass filter processing and the generated phase delay is compensated for in the second servo control system 30. Therefore, in the related art, instead of improving adherence of the first servo control system 20, a part of a trajectory that was initially intended to be realized by the first servo control system 20 is realized in the second servo control system 30. Therefore, it was not possible to effectively use the range of movement of the second servo control system 30.

On the other hand, since the controller 13 prevents the occurrence of "a phase lag from the first inverse kinematics trajectory SP" that is generated conventionally according to removal of the high frequency component, it is not necessary to compensate for a part of a trajectory that was initially intended to be realized by the first servo control system 20 in the second servo control system 30. That is, the controller 13 can effectively use the range of movement of the second servo control system 30 by preventing the occurrence of a phase delay while maintaining adherence of the first servo control system 20 according to removal of the high frequency component. The controller 13 has an effect that it is possible to maintain adherence of the first servo control system 20 and it is possible to effectively use ranges of movement of the first servo control system 20 and the second servo control system 30.

In the controller 13, the low pass filter unit 130 performs the low pass filter processing on the first inverse kinematics trajectory SP in order from a reverse direction to a forward direction of the time axis and generates a corrected trajectory SPf.

According to the above configuration, the controller 13 performs the low pass filter processing on the first inverse kinematics trajectory SP in order from a reverse direction to a forward direction of the time axis and generates a corrected trajectory SPf.

Here, when the low pass filter processing (the zero phase filter processing) is performed on the first inverse kinematics trajectory SP in order from a forward direction to a reverse direction of the time axis, a data jump occurs in the corrected trajectory SPf at a start time (at a time of t=0) with respect to the first inverse kinematics trajectory SP.

On the other hand, the controller 13 performs the low pass filter processing on the first inverse kinematics trajectory SP in order from a reverse direction to a forward direction of the time axis and generates a corrected trajectory SPf. Therefore, the controller 13 has an effect that it is possible to prevent a data jump from occurring in the corrected trajectory SPf at a start time (at a time of t=0) with respect to the first inverse kinematics trajectory SP.

To summarize the above, the controller 13 generates a trajectory that is obtained by performing low pass filter processing with delay compensation on a trajectory generated by performing inverse kinematics calculation on the target trajectory Tt as a command trajectory of the first actuator 22. Specifically, in the controller 13, a zero phase filter is used. The zero phase filter cancels out a phase lag by performing filter processing twice (one round trip) in a forward direction and a reverse direction of the time axis. In addition, the controller 13 performs zero phase filter processing in order from a reverse direction to a forward direction in order to remove a data jump at a start.

The controller 13 can reduce a phase lag of a trajectory (command trajectory) of the low speed actuator (the first actuator 22) and thus reduce the operation range of the high speed actuator (the second actuator 32). Therefore, the controller 13 can support a higher speed trajectory. In addition, the controller 13 can improve adherence of the low speed actuator by strengthening an effect of the low pass filter and improve control accuracy overall (both of the first servo control system 20 and the second servo control system 30). In addition, the controller 13 can expand options for the high speed actuator used in the control system 1 and can facilitate selection of a high speed actuator to be used. Next, a configuration and the like of the controller 13 of which the overview has been summarized above will be described in detail with reference to FIG. 17 and the like.

(Details of control device)

FIG. 17 is a block diagram showing a main part configuration and the like of the controller 13 and the like according to Embodiment 4 of the disclosure. As described above, the configuration of the controller 13 is the same as the configuration of the controller 11 except that "the zero phase filter unit 131 is included in place of the low pass filter unit 130" and "the storage unit 160 is included." Thus, only the storage unit 160 and the zero phase filter unit 131 will be described below.

The controller 13 includes the storage unit 160 as a storage device in which various types of data are stored. In the storage unit 160, the first instruction trajectory table 161 and a second instruction trajectory table 162 are stored. In the first instruction trajectory table 161, "a command trajectory of the first servo control system 20" is stored, and specifically, a corrected trajectory SPf(i) is stored by the low pass filter unit 130. In the second instruction trajectory table 162, "a command trajectory of the second servo control system 30" is stored, and specifically, the second inverse kinematics trajectory IKt(i) is stored by the second inverse kinematics calculation unit 150.

The zero phase filter unit 131 removes a high frequency component from the first inverse kinematics trajectory SP(i) acquired from the first inverse kinematics calculation unit 120 so that no phase delay occurs and generates the corrected trajectory SPf(i) for each axis of the first servo control system 20. Specifically, the zero phase filter unit 131 performs zero phase filter processing on the first inverse kinematics trajectory SP(i) and generates the corrected trajectory SPf(i).

Here, in the zero phase filter processing, filter processing (low pass filter processing in the present embodiment) is performed in both directions of a forward direction and a reverse direction (for example, once each in a forward direction and a reverse direction of the time axis, and therefore twice in total). Specifically, low pass filter processing that is performed on the first inverse kinematics trajectory SP(i) in both directions of a forward direction and a reverse direction of the time axis will be referred to as "zero phase filter processing." Here, the low pass filter processing will be referred to as low pass filtering and zero phase filter processing will be referred to as zero phase filtering.

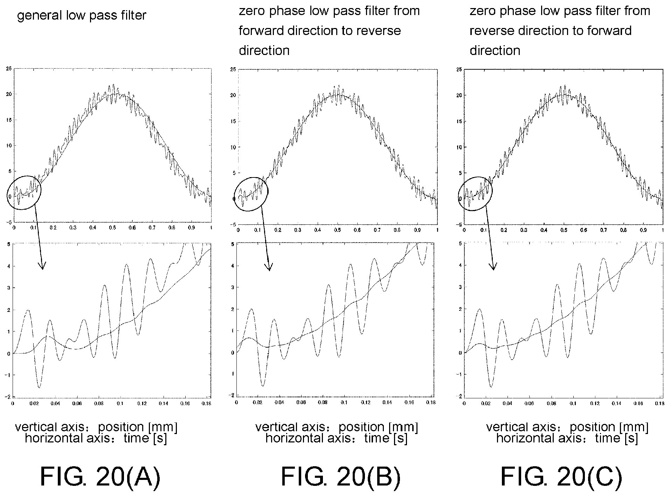

In particular, the zero phase filter unit 131 performs low pass filter processing on the first inverse kinematics trajectory SP(i) in order from a reverse direction to a forward direction of the time axis, that is, performs zero phase filter processing in a reverse direction (reverse order) on the time axis, and generates the corrected trajectory SPf(i). When low pass filter processing is performed in order from a reverse direction to a forward direction of the time axis, the zero phase filter unit 131 can generate a corrected trajectory SPf(i) with no data jump with respect to the first inverse kinematics trajectory SP(i) at a start time (at a time of t=0). A filter type of the low pass filter (zero phase filter) used in the zero phase filter unit 131 may be, for example, a second-order Butterworth type with a cutoff frequency of 10 Hz. The zero phase filter processing performed by the zero phase filter unit 131 will be described below in detail with reference to FIGs. 20(A)~20(C).

The zero phase filter unit 131 stores the generated corrected trajectory SPf(i) in the first instruction trajectory table 161 of the storage unit 160 as "a command trajectory of the first servo control system 20." In addition, the zero phase filter unit 131 outputs the generated corrected trajectory SPf(i) to the direct kinematics calculation unit 140.

The zero phase filter unit 131 computes a trajectory in advance offline and stores the computed trajectory result in a memory. That is, the zero phase filter unit 131 stores the corrected trajectory SPf(i) that is generated by performing zero phase filter processing on the first inverse kinematics trajectory SP(i) in the first instruction trajectory table 161.

The controller 13 (the zero phase filter unit 131) creates the first instruction trajectory table 161 in advance according to an offline process, that is, calculates "a command trajectory of the first servo control system 20" in advance. The controller 13 may perform all processes offline and may create the second instruction trajectory table 162 in advance, that is, may calculate "a command trajectory of the second servo control system 30" in advance. Here, FIG. 17 shows an example in which the controller 13 performs all processes offline in advance and creates the second instruction trajectory table 162. However, it is not necessary for the controller 13 to calculate "a command trajectory of the second servo control system 30" in advance, that is, it is not necessary to create the second instruction trajectory table 162 in advance.

Here, in the controllers 10, 11, and 12 described above, since no zero phase processing is performed, it is not necessary to generate a command trajectory of the first servo control system 20 (corrected trajectory SPf) in advance and store it in the first instruction trajectory table 161. Therefore, in the controllers 10, 11, and 12, the first instruction trajectory table 161 and the second instruction trajectory table 162 are not included. However, the controllers 10, 11, and 12 may include a storage unit (not shown), and store the first instruction trajectory table 161 and the second instruction trajectory table 162 in the storage unit.

(Processes performed by controller)

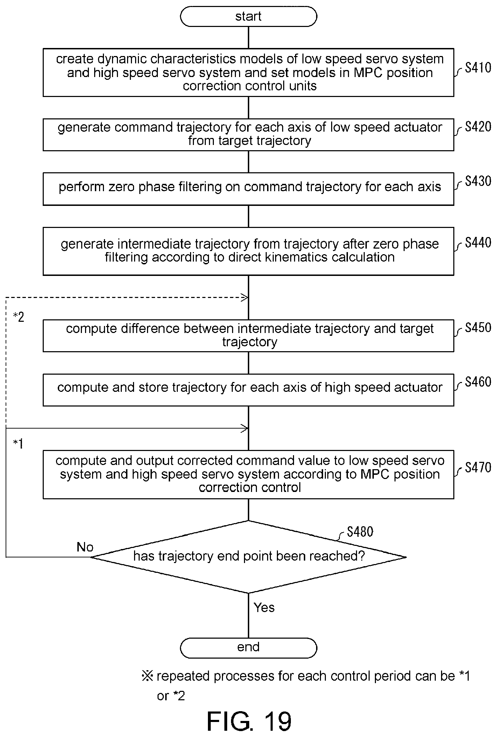

FIG. 19 is a flowchart showing an overview of processes performed by the controller 13. The controller 13 performs zero phase filter processing on the first inverse kinematics trajectory SP(i) in order "from a reverse direction to a forward direction of the time axis" and thus prevents a phase lag from occurring in the corrected trajectory SPf(i).

In addition, the controller 13 creates dynamic characteristics models of the first servo control system 20 and the second servo control system 30 in advance and performs MPC position correction control on the first servo control system 20 and the second servo control system 30 using the created dynamic characteristics model. Specifically, the controller 13 corrects the first command value Pc(i) according to MPC using the dynamic characteristics model of the first servo control system 20 and outputs the corrected first command value Pc(i) to the first servo control system 20. In addition, the controller 13 corrects the second command value Sc(i) according to MPC using the dynamic characteristics model of the second servo control system 30 and outputs the corrected second command value Sc(i) to the second servo control system 30. The controller 13 applies MPC position correction control to control the first servo control system 20 and the second servo control system 30, and thus can reduce an adherence error due to a response delay of the first servo control system 20 and the second servo control system 30. Processes performed by the controller 13 will be described below in detail with reference to FIG. 19.

The controller 13 creates dynamic characteristics models of the low speed servo system (the first servo control system 20) and the high speed servo system (the second servo control system 30) in advance and sets the models in the first response prediction unit 172 and the second response prediction unit 176 (S410).

The first inverse kinematics calculation unit 120 generates a command value for each axis of the first actuator 22 from the target trajectory Tt, that is, performs inverse kinematics calculation on the target trajectory Tt, and generates the first inverse kinematics trajectory SP(i) (S420).

The zero phase filter unit 131 performs zero phase filtering on a trajectory for each axis (that is, the first inverse kinematics trajectory SP(i)), and stores the generated corrected trajectory SPf(i) in the first instruction trajectory table 161 of the storage unit 160 (S430).

The controller 13 computes "a difference between a command value generated from a command trajectory after zero phase filtering and a command value of a target trajectory," and generates the command value for each axis of the high speed actuator (the second actuator 32) from the computed difference.

For example, the direct kinematics calculation unit 140 generates an intermediate trajectory (that is, the direct kinematics trajectory FKt) from the trajectory after zero phase filtering (that is, the corrected trajectory SPf(i)) according to direct kinematics calculation (S440). Then, the second inverse kinematics calculation unit 150 computes a difference (error) between the intermediate trajectory and the target trajectory Tt (S450). Then, the second inverse kinematics calculation unit 150 computes a trajectory for each axis of the second actuator 32 using the error (difference) computed in S450 and stores it in the second instruction trajectory table 162 of the storage unit 160 (S460). Specifically, the second inverse kinematics calculation unit 150 performs inverse kinematics calculation on "an error between the intermediate trajectory (that is, the direct kinematics trajectory FKt) and the target trajectory Tt" and generates the second inverse kinematics trajectory IKt(i) which is a command trajectory for each axis of the second servo control system 30. Then, the second inverse kinematics calculation unit 150 stores the generated second inverse kinematics trajectory IKt(i) in the second instruction trajectory table 162 of the storage unit 160.

The second inverse kinematics calculation unit 150 generates a second inverse kinematics trajectory IKt including a trajectory corresponding to an error between the target trajectory Tt and the direct kinematics trajectory FKt so that "a combined trajectory of the direct kinematics trajectory FKt (intermediate trajectory) and the second inverse kinematics trajectory IKt matches the target trajectory Tt." The second inverse kinematics calculation unit 150 may generate a second inverse kinematics trajectory IKt including a trajectory corresponding to an error between the first inverse kinematics trajectory SP and the intermediate trajectory so that "a combined trajectory of the intermediate trajectory and the second inverse kinematics trajectory IKt matches the target trajectory Tt." The second inverse kinematics calculation unit 150 generates a second inverse kinematics trajectory IKt (second command trajectory) including a trajectory corresponding to a high frequency component removed from the first inverse kinematics trajectory SP(i) by the zero phase filter unit 131 as "a command trajectory of the second servo control system 30."

The controller 13 computes the corrected command value of each of the low speed servo system and the high speed servo system according MPC position correction control and outputs the computed and corrected command value to the low speed servo system and the high speed servo system (S470). Specifically, an MPC command unit 174 corrects the first command value Pc(i) and the second command value Sc(i) according to MPC using the dynamic characteristics models of the first servo control system 20 and the second servo control system 30 and outputs a corrected first command value Pc(i) and a corrected second command value Sc(i).

The first MPC position command unit 171 corrects the first command value Pc(i) generated from the corrected trajectory SPf(i) stored in the first instruction trajectory table 161 for each control period of the first servo control system 20 according to MPC using the dynamic characteristics model of the first servo control system 20. Then, the first MPC position command unit 171 outputs the corrected first command value Pc(i) to the first servo control system 20.

The second MPC position command unit 175 corrects the second command value Sc(i) generated from the second inverse kinematics trajectory IKt(i) stored in the second instruction trajectory table 162 for each control period of the second servo control system 30 according to MPC using the dynamic characteristics model of the second servo control system 30. Then, the second MPC position command unit 175 outputs the corrected second command value Sc(i) to the second servo control system 30. Then, the controller 13 repeats the processes of S450 to S470 or the process of S470 for each control period while determining whether a trajectory end point has been reached (S480). Specifically, the controller 13 repeats "a process related to only the first servo control system 20" among "the processes of S450 to S470 or the process of S470" with a control period of the first servo control system 20 while determining whether a trajectory end point has been reached (S480). In addition, the controller 13 repeats a process (for example, a process related to the second servo control system 30) other than "a process related to only the first servo control system 20" among "the processes of S450 to S470 or the process of S470" with a control period of the second servo control system 30 while determining whether a trajectory end point has been reached (S480).

(Zero phase filter processing)

Here, zero phase filter processing (zero phase filtering) performed by the zero phase filter unit 131 will be described in detail. As described above, the zero phase filter unit 131 performs low pass filter processing on the first inverse kinematics trajectory SP(i) in order from a reverse direction to a forward direction of the time axis (that is, in a reverse direction (reverse order) on the time axis) and generates the corrected trajectory SPf(i).

The zero phase filter unit 131 obtains a coefficient of first-order delay filter computation in advance. Specifically, the zero phase filter unit 131 obtains "a=Ts/(T+Ts)" and "b=T/(T+Ts)" in advance. Here, Ts is a sampling period and T is a filter time constant.

The zero phase filter unit 131 creates temporary trajectory data SPr(i) in which the time axis is reversed in the first inverse kinematics trajectory SP(i), and obtains "SPr(i)=SP(n-i)." The zero phase filter unit 131 performs filtering computation (low pass filter processing) for the first time (in a reverse direction of the time axis), that is, obtains "SPfr(i)=a×SPr(i)+b×SPr(i-1)." However, "SPr(-1)=SPr(0)" is assumed.

The zero phase filter unit 131 reverses the time axis again and returns to its original time axis, that is, obtains "SPfh(i)=SPfr(n-i)." The zero phase filter unit 131 performs filtering computation for the second time (in a forward direction) and obtains a corrected trajectory SPf(i) after zero phase filtering. That is, the zero phase filter unit 131 obtains "SPf(i)=a×SPfn(i)+b×SPfn(i-1)." However, "SPfn(-1)=SP(0)" is assumed. Here, because "SPfn(-1)=SP(0)" is assumed rather than "SPfn(-1)=SPfn(0)," the zero phase filter unit 131 can prevent jump in SP at a start time.

The zero phase filter unit 131 performs zero phase filter processing in a reverse order of the time axis (that is, low pass filter processing is performed one round trip from a reverse direction to a forward direction of the time axis) and prevents the occurrence of data jump at a start time, which will be described with reference to FIGs. 20(A)~20(C).

(Method of removing high frequency component)

FIGs. 20(A)~20(C) are diagrams explaining a phase delay and a data jump generated in the corrected trajectory SPf(i) according to a method of removing a high frequency component from the first inverse kinematics trajectory SP(i). In FIGs. 20(A)~20(C), the vertical axis represents a position, and the horizontal axis represents a time (t). In FIGs. 20 (A)~ 20(C), the vicinity of the start time (t=0) in the upper diagram enlarged is the lower diagram. FIG. 20(A) shows the first inverse kinematics trajectory SP(i) and the corrected trajectory SPf(i) when general low pass filter processing (low pass filtering) is performed on the first inverse kinematics trajectory SP(i). In FIG. 20(A), the low pass filter type is a fourth-order Butterworth type with a cutoff frequency of 10 Hz. FIG. 20(B) shows the first inverse kinematics trajectory SP(i) and the corrected trajectory SPf(i) when low pass filter processing is performed on the first inverse kinematics trajectory SP(i) from a forward direction to a reverse direction of the time axis one round trip. FIG. 20(C) shows the first inverse kinematics trajectory SP(i) and the corrected trajectory SPf(i) when low pass filter processing is performed on the first inverse kinematics trajectory SP(i) from a reverse direction to a forward direction of the time axis one round trip. In each of Figs. 20(B) and 20(C), a filter type of the zero phase filter is a second-order Butterworth type with a cutoff frequency of 10 Hz.

As shown in FIG. 20(A), when general low pass filter processing (filter processing) is performed, a phase lag from the first inverse kinematics trajectory SP(i) occurs in the corrected trajectory SPf(i) according to this filter processing.

On the other hand, as shown in FIGs. 20(B) and 20(C), when zero phase filter processing is performed, in other words, when "filter processing is performed once in both directions of a forward direction and a reverse direction of the time axis and therefore twice in total (performed one round trip)," it is possible to remove a phase lag.

However, when "filter processing is performed from a forward direction to a reverse direction of the time axis one round trip (that is, when filter processing is performed in order from a forward direction to a reverse direction of the time axis)," as shown in FIG. 20(B), a data jump occurs at a start time (t=0).

Therefore, when zero phase filter processing is performed in order "from a reverse direction to a forward direction of the time axis," in other words, when "filter processing is performed from a reverse direction to a forward direction of the time axis one round trip," it is possible to avoid a data jump at a start time. In FIG. 20(C), when zero phase filter processing is performed in order "from a reverse direction to a forward direction of the time axis," it is possible to avoid a data jump at a start time (t=0).

(Effects of controller)

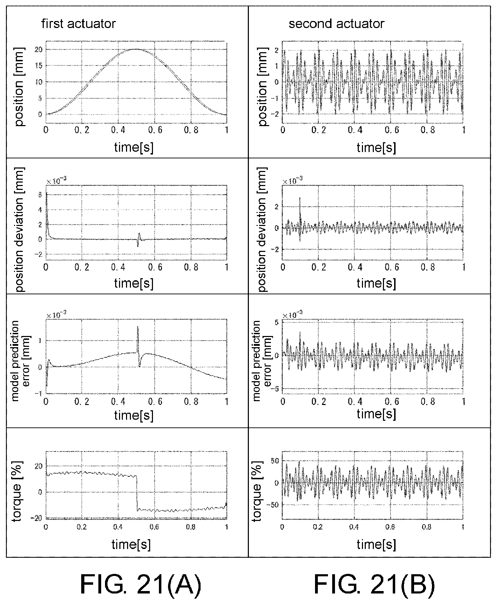

FIGs. 21(A) and 21(B) are diagrams showing changes in positions, position deviations, model prediction errors, and torques of the first actuator 22 and the second actuator 32 controlled by the controller 13 in the control test shown in FIGs. 4(A) and 4(B). FIG. 21(A) shows changes in position, position deviation, model prediction error, and torque of the first actuator 22 controlled by the controller 13 in order from the top. FIG. 21(B) shows changes in position, position deviation, model prediction error, and torque of the second actuator 32 controlled by the controller 13 in order from the top. In all of the drawings shown in FIGs. 21(A) and 21(B), the horizontal axis represents a time (t).

FIGs. 22(A) and 22(B) are diagrams showing all positions (FIG. 22(A)) and changes in position deviations (FIG. 22(B)) of the first actuator 22 and the second actuator 32 controlled by the controller 13 in the control test shown in FIGs. 4(A) and 4(B). In all of the drawings shown in FIGs. 22(A) and 22(B), the horizontal axis represents a time (t). Here, in FIG. 22(A), a command value and a combined control amount of low speed and high speed (a value obtained by adding (combining) a measured value of a control amount of the first actuator 22 and a measured value of a control amount of the second actuator 32) almost overlap.

The controller 13 performs low pass filtering on the first inverse kinematics trajectory SP(i) in order "from a reverse direction to a forward direction of the time axis" one round trip and generates "a command trajectory of the first servo control system 20." That is, the controller 13 performs zero phase filter processing on the first inverse kinematics trajectory SP(i) in order "from a reverse direction to a forward direction of the time axis," and generates "a command trajectory of the first servo control system 20." The low pass filter type of the low pass filter used in the controller 13 is a second-order Butterworth type with a cutoff frequency of 10 Hz. The controller 13 additionally corrects the first command value Pc(i) and the second command value Sc(i) by MPC using dynamic characteristics models of the first servo control system 20 and the second servo control system 30 and improves adherence performance.

As can be understood when comparing FIG. 21 (B) and FIG. 5(B), the controller 13 can reduce the operation range of the high speed actuator (the second actuator 32) compared to the controller 10.

[Supplement]

The following can be considered as a reason for which all (both) peak deviations (adherence accuracy) of the first actuator 22 and the second actuator 32 shown in FIG. 6(B) and FIG. 16(B) are reduced merely to a little more than 0.2 mm. That is, a "peak deviation (adherence accuracy) could be reduced merely to little more than 0.2 mm" because the control deviation is evaluated in the controller 10 and the controller 12.

In other words, the following two points are reasons why the "peak deviation (adherence accuracy) can only be reduced to little more than 0.2 mm." That is, firstly, since a time is required to transmit a command position from the controller 10 and the controller 12 to "the first servo control system 20 and the second servo control system 30," "a peak deviation (adherence accuracy) can only be reduced to little more than 0.2 mm". In addition, secondly, since a time is required to transmit a feedback position (actual measurement position) from "the first servo control system 20 and the second servo control system 30" to the controller 10 and the controller 12, "a peak deviation (adherence accuracy) can only be reduced to little more than 0.2 mm."

Therefore, when times required for the first and second transmissions on the high speed side (that is, the second servo control system 30) can be shortened, all (both) peak deviations (adherence accuracy) shown in FIG. 6(B) and FIG. 16(B) can be further reduced. In this case, in all (both) peak deviations (adherence accuracy) shown in FIG. 6(B) and FIG. 16(B), a difference from the all (both) peak deviations (adherence accuracy) shown in FIG. 11(B) becomes smaller.

When the controllers 11 and 13 apply MPC to the second servo control system 30 (high speed servo system), it is possible to compensate for a transmission delay between each of the controllers 11 and 13 and the second servo control system 30. Therefore, all (both) peak deviations shown in FIG. 11(B) and FIG. 22(B) become smaller.

[Modified example] An example in which the controllers 10, 11, 12, and 13 control two servo control systems of the first servo control system 20 and the second servo control system 30 in cooperation has been described above. However, it is not necessary to provide two servo control systems that the controllers 10, 11, 12, and 13 control in cooperation. The controllers 10, 11, 12, and 13 may output a command value generated using the target trajectory Tt to a plurality of servo control systems and control the plurality of servo control systems in cooperation.

[Example of Implementation by software] Control blocks (in particular, the target trajectory acquisition unit 110, the first inverse kinematics calculation unit 120, the low pass filter unit 130, the zero phase filter unit 131, the direct kinematics calculation unit 140, the second inverse kinematics calculation unit 150, the MPC command unit 170, the first MPC position command unit 171, the first response prediction unit 172, the position command unit 173, the second MPC position command unit 175, the second response prediction unit 176, the instruction unit 180, the first instruction unit 181, the second instruction unit 182, and the response prediction unit 190) of the controllers 10, 11, 12, and 13 may be implemented by a logic circuit (hardware) formed in an integrated circuit (IC chip), or the like, or may be implemented by software.

In the latter case, the controllers 10, 11, 12, and 13 include a computer that executes an instruction of a program which is software for implementing functions. The computer includes, for example, one or more processors, and includes a computer readable recording medium in which the program is stored. Thus, in the computer, when the processor reads and executes the program from the recording medium, the above function of the disclosure is achieved. As the processor, for example, a central processing unit (CPU) can be used. As the recording medium, a "non-transitory tangible medium," for example, a tape, a disk, a card, a semiconductor memory, or a programmable logic circuit other than a read only memory (ROM) can be used. In addition, a random access memory (RAM) that opens the program may be further included. In addition, the program may be supplied to the computer through an arbitrary transmission medium (such as a communication network and broadcast waves) that can transmit the program. Here, an aspect of the disclosure may be realized in the form of a data signal combined with carrier waves embodied according to electric transmission of the program.

[Reference Signs List]

10 Controller (control device)
11 Controller (control device)
12 Controller (control device)
13 Controller (control device)
20 First servo control system
30 Second servo control system
150 Second inverse kinematics calculation unit (generation unit)
172 First response prediction unit (prediction unit)
171 First MPC position command unit (generation unit)
190 Response prediction unit (prediction unit)
FKt Direct kinematics trajectory (intermediate trajectory)
IKt Second inverse kinematics trajectory (second command trajectory)
Pc First command value
SP First inverse kinematics trajectory (reference trajectory)
SPf Corrected trajectory (first command trajectory)
S170 Prediction step, generation step
S340 Prediction step
S370 Generation step

**Claims**

1. A control device (10) configured to generate a first command trajectory (SPf) in which a high frequency component is removed from a reference trajectory (SP) by low pass filter processing as a command trajectory of a first servo control system (20) and to generate a second command trajectory (IKt) including a trajectory corresponding to the high frequency component as a command trajectory of a second servo control system (30), the control device (10) comprising:

a prediction unit (172) configured to predict a response of the first servo control system (20) corresponding to the first command trajectory(SPf) using a dynamic characteristics model of the first servo control system (20); and

a generation unit (150) configured to perform

(1) correcting a first command value (Pc) generated from the first command trajectory (SPf) or
(2) generating the second command trajectory (IKt),

by using the response of the first servo control system (20) predicted by the prediction unit (172).

2. The control device (10) according to claim 1,
wherein the prediction unit (172) predicts a control amount which is an output of the first servo control system (20) with respect to the first command value (Pc) using the dynamic characteristics model of the first servo control system (20), and
wherein the generation unit (150) corrects the first command value (Pc) according to model predictive control using the control amount predicted by the prediction unit (172) and a measured value of a control amount of the first servo control system (20) acquired as feedback information from the first servo control system (20).

3. The control device (10) according to claim 1,
wherein the generation unit (172) generates the second command trajectory (IKt) including a trajectory corresponding to an error between an intermediate trajectory(FKt) and the reference trajectory (SP), and wherein the intermediate trajectory (FKt) is generated using the response of the first servo control system (20) predicted by the prediction unit (172).

4. The control device (10) according to any one of claims 1 to 3, comprising
a filter unit (130) configured to perform the low pass filter processing on the reference trajectory (SP) in both directions of a forward direction and a reverse direction of a time axis and generate the first command trajectory (SPf).

5. The control device (10) according to claim 4,
wherein the filter unit (130) performs the low pass filter processing on the reference trajectory (SP) in order from the reverse direction to the forward direction of the time axis and generates the first command trajectory (SPf).

6. A control method of a control device (10) configured to generate a first command trajectory (SPf) in which a high frequency component is removed from a reference trajectory (SP) by low pass filter processing as a command trajectory of a first servo control system (20) and to generate a second command trajectory (IKt) including a trajectory corresponding to the high frequency component as a command trajectory of a second servo control system (30), the method comprising:

a prediction step of predicting a response of the first servo control system (20) corresponding to the first command trajectory (SPf) using a dynamic characteristics model of the first servo control system (20); and
a generation step of

(1) correcting a first command value (Pc) generated from the first command trajectory (SPf) or
(2) generating the second command trajectory (IKt),

by using the response of the first servo control system (20) predicted in the prediction step.

7. An information processing program, rendering a computer to function as the control device (10) according to any one of claims 1 to 5, and rendering a computer to function as each of the units of the control device (10).

8. A computer readable recording medium in which the information processing program according to claim 7 is recorded.

FIG. 1

FIG. 2

```
                          ┌─────────────┐
                          │    start    │
                          └─────────────┘
                                 │
  ┌────────────────────────────────────────────────────────────┐
  │ create dynamic characteristics model of low speed servo system │ ⟋S110
  │           and set it in MPC position correction control unit   │
  └────────────────────────────────────────────────────────────┘
                                 │
         ┌───────────────────────►
         │                       │
  ┌────────────────────────────────────────────────────────────┐
  │ generate command trajectory for each axis of low speed actuator │ ⟋S120
  │                    from target trajectory                      │
  └────────────────────────────────────────────────────────────┘
         │                       │
  ┌────────────────────────────────────────────────────────────┐
  │ perform low pass filtering on command trajectory for each axis │ ⟋S130
  └────────────────────────────────────────────────────────────┘
         │                       │
  ┌────────────────────────────────────────────────────────────┐
  │ generate intermediate trajectory from trajectory after low pass │ ⟋S140
  │          filtering according to direct kinematics calculation  │
  └────────────────────────────────────────────────────────────┘
         │                       │
  ┌────────────────────────────────────────────────────────────┐
  │ compute difference between intermediate trajectory and target  │ ⟋S150
  │                          trajectory                            │
  └────────────────────────────────────────────────────────────┘
         │                       │
  ┌────────────────────────────────────────────────────────────┐
  │     compute trajectory for each axis of high speed actuator    │ ⟋S160
  └────────────────────────────────────────────────────────────┘
         │                       │
  ┌────────────────────────────────────────────────────────────┐
  │ compute and output corrected command value to low speed servo  │ ⟋S170
  │ system according to MPC position correction control and output │
  │          command value to high speed servo system             │
  └────────────────────────────────────────────────────────────┘
         │                       │
         │                  ⟋S180
         │              ◇
      No │      ◇                       ◇
         └──── has trajectory end point been reached?
                  ◇                       ◇
                       ◇
                        │ Yes
                 ┌─────────────┐
                 │     end     │
                 └─────────────┘
```

## FIG. 3

XY path of curve 1 + curve 2

X axis command value of left
graph path

vertical axis: position [mm] horizontal axis: position [mm]

vertical axis: position [mm] horizontal axis: time [s]

FIG. 4(A)

FIG. 4(B)

FIG. 5(A)          FIG. 5(B)

vertical axis: position deviation [mm]
horizontal axis: time [s]

command value [mm]

low speed control amount [mm]

- - - - combined control amount of [mm]
low speed and high speed

# FIG. 6(A)

vertical axis: position deviation [mm]
horizontal axis: time [s]

# FIG. 6(B)

FIG. 7

FIG. 8

2: control system

first servo control system

20

21 first servo driver

22 first actuator

command value Pc(i) for number of axes

second servo control system

30

31 second servo driver

32 second actuator

command value Sc(i) for number of axes

11 controller

target trajectory Tt

inverse kinematics

low pass filter

forward kinematics

MPC position correction control

inverse kinematics

MPC position correction control

+ −

```
                          ┌──────────────────┐
                          (      start        )
                          └──────────────────┘
                                   │
  ┌──────────────────────────────────────────────────────────┐
  │ create dynamic characteristics models of low speed servo  │
  │ system and high speed servo system and set models in MPC  │ ─ S210
  │ position correction control units                          │
  └──────────────────────────────────────────────────────────┘
                                   │
        ┌──────────────────────────>│
        │   ┌──────────────────────────────────────────────────┐
        │   │ generate command trajectory for each axis of low  │ ─ S220
        │   │ speed actuator from target trajectory              │
        │   └──────────────────────────────────────────────────┘
        │                          │
        │   ┌──────────────────────────────────────────────────┐
        │   │ perform low pass filtering on command trajectory   │ ─ S230
        │   │ for each axis                                      │
        │   └──────────────────────────────────────────────────┘
        │                          │
        │   ┌──────────────────────────────────────────────────┐
        │   │ generate intermediate trajectory from trajectory   │ ─ S240
        │   │ after low pass filtering according to direct       │
        │   │ kinematics calculation                             │
        │   └──────────────────────────────────────────────────┘
        │                          │
        │   ┌──────────────────────────────────────────────────┐
        │   │ compute difference between intermediate trajectory │ ─ S250
        │   │ and target trajectory                              │
        │   └──────────────────────────────────────────────────┘
        │                          │
        │   ┌──────────────────────────────────────────────────┐
        │   │ compute trajectory for each axis of high speed     │ ─ S260
        │   │ actuator                                           │
        │   └──────────────────────────────────────────────────┘
        │                          │
        │   ┌──────────────────────────────────────────────────┐
        │   │ compute and output corrected command value to low  │ ─ S270
        │   │ speed servo system and high speed servo system     │
        │   │ according to MPC position correction control       │
        │   └──────────────────────────────────────────────────┘
        │                          │
        │         No          ╱◇╲           S280
        └────────────────────◇     ◇
                              ◇ has trajectory end point been reached? ◇
                               ╲◇╲       ╱◇╱
                                   │
                                  Yes
                                   │
                          ┌──────────────────┐
                          (       end         )
                          └──────────────────┘
```

# FIG. 9

| first actuator | second actuator |
|---|---|

vertical axis: position [mm]
horizontal axis: time [s]

vertical axis: position [mm]
horizontal axis: time [s]

vertical axis: position deviation [mm]
horizontal axis: time [s]

vertical axis: position deviation [mm]
horizontal axis: time [s]

vertical axis: model prediction error [mm]
horizontal axis: time [s]

vertical axis: model prediction error [mm]
horizontal axis: time [s]

vertical axis: torque [%]
horizontal axis: time [s]

vertical axis: torque [%]
horizontal axis: time [s]

FIG. 10(A)        FIG. 10(B)

vertical axis: position deviation [mm]
horizontal axis: time [s]

- command value [mm]
- low speed control amount [mm]
- combined control amount of low speed and high speed [mm]

## FIG. 11(A)

vertical axis: position deviation [mm]
horizontal axis: time [s]

## FIG. 11(B)

FIG. 12

3: control system

12

110 target trajectory acquisition unit

target trajectory Tt

120 first inverse kinematics calculation unit

first inverse kinematics trajectory SP(i) for each axis of first servo control system

130 low pass filter unit

corrected trajectory SP'(i) for each axis of first servo control system

190 response prediction unit

140 direct kinematics calculation unit

direct kinematics trajectory FKt

150 second inverse kinematics calculation unit

second inverse kinematics trajectory IKt(i) for each axis of second servo control system

180 instruction unit

181 first instruction unit

182 second instruction unit

first command value Pc(i) for each axis of first servo control system

second command value Sc(i) for each axis of second servo control system

20 first servo control system

21 first servo driver

22 first actuator

30 second servo control system

31 second servo driver

32 second actuator

FIG. 13

start

create dynamic characteristics model of low speed servo system and set it in response prediction unit — S310

generate command trajectory for each axis of low speed actuator from target trajectory — S320

perform low pass filtering on command trajectory for each axis — S330

predict and compute response for each axis of low speed servo system — S340

generate intermediate trajectory from prediction response according to direct kinematics calculation — S350

compute difference between intermediate trajectory and target trajectory — S360

compute trajectory for each axis of high speed actuator — S370

output command value to low speed servo system and high speed servo system — S380

S390

No — has trajectory end point been reached?

Yes

end

FIG. 14

first actuator

vertical axis: position [mm]
horizontal axis: time [s]

vertical axis: position deviation [mm]
horizontal axis: time [s]

vertical axis: torque [%]
horizontal axis: time [s]

second actuator

vertical axis: position [mm]
horizontal axis: time [s]

vertical axis: position deviation [mm]
horizontal axis: time [s]

vertical axis: torque [%]
horizontal axis: time [s]

FIG. 15(A)          FIG. 15(B)

43

vertical axis: position deviation [mm]
horizontal axis: time [s]

Legend:
— command value [mm]
— low speed control amount [mm]
- - - combined control amount of [mm] low speed and high speed

## FIG. 16(A)

vertical axis: position deviation [mm]
horizontal axis: time [s]

## FIG. 16(B)

FIG. 17

FIG. 18

```
                    ┌──────────────┐
                    │    start     │
                    └──────┬───────┘
                           │
  ┌────────────────────────────────────────────────┐
  │ create dynamic characteristics models of low    │  ⌐ S410
  │ speed servo system and high speed servo system  │
  │ and set models in MPC position correction       │
  │ control units                                   │
  └────────────────────────┬───────────────────────┘
                           │
  ┌────────────────────────────────────────────────┐
  │ generate command trajectory for each axis of    │  ⌐ S420
  │ low speed actuator from target trajectory        │
  └────────────────────────┬───────────────────────┘
                           │
  ┌────────────────────────────────────────────────┐
  │ perform zero phase filtering on command          │  ⌐ S430
  │ trajectory for each axis                         │
  └────────────────────────┬───────────────────────┘
```

create dynamic characteristics models of low speed servo system and high speed servo system and set models in MPC position correction control units — S410

generate command trajectory for each axis of low speed actuator from target trajectory — S420

perform zero phase filtering on command trajectory for each axis — S430

generate intermediate trajectory from trajectory after zero phase filtering according to direct kinematics calculation — S440

*2

compute difference between intermediate trajectory and target trajectory — S450

compute and store trajectory for each axis of high speed actuator — S460

*1

compute and output corrected command value to low speed servo system and high speed servo system according to MPC position correction control — S470

No — has trajectory end point been reached? — S480

Yes

end

※ repeated processes for each control period can be *1 or *2

# FIG. 19

general low pass filter

zero phase low pass filter from forward direction to reverse direction

zero phase low pass filter from reverse direction to forward direction

vertical axis: position [mm]
horizontal axis: time [s]

vertical axis: position [mm]
horizontal axis: time [s]

vertical axis: position [mm]
horizontal axis: time [s]

FIG. 20(A)

FIG. 20(B)

FIG. 20(C)

FIG. 21(A)         FIG. 21(B)

vertical axis: position deviation [mm]
horizontal axis: time [s]

command value [mm]
low speed control amount [mm]
combined control amount of
low speed and high speed [mm]

FIG. 22(A)

vertical axis: position deviation [mm]
horizontal axis: time [s]

FIG. 22(B)

first actuator

second actuator

vertical axis: position [mm]
horizontal axis: time [s]

vertical axis: position [mm]
horizontal axis: time [s]

vertical axis: position deviation [mm]
horizontal axis: time [s]

vertical axis: position deviation [mm]
horizontal axis: time [s]

vertical axis: torque [%]
horizontal axis: time [s]

vertical axis: torque [%]
horizontal axis: time [s]

# FIG. 23(A)          FIG. 23(B)

vertical axis: position deviation [mm]
horizontal axis: time [s]

FIG. 24(A)

vertical axis: position deviation [mm]
horizontal axis: time [s]

FIG. 24(B)

Europäisches
Patentamt

European
Patent Office

Office européen
des brevets

# EUROPEAN SEARCH REPORT

**Application Number**

EP 18 15 6743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/125747 A1 (MITSUBISHI ELECTRIC CORP [JP]) 27 August 2015 (2015-08-27) * paragraph [0014] - paragraph [0028]; figure 1 * | 1-8 | INV. G05B19/408 G05B13/04 |
| A | EP 3 173 883 A1 (OMRON TATEISI ELECTRONICS CO [JP]) 31 May 2017 (2017-05-31) * the whole document * | 2 | |
| A | Julius O. Smith Iii: "Forward-Backward Filtering" In: "Introduction to Digital Filters with Audio Applications", 1 September 2007 (2007-09-01), XP055509310, * the whole document * | 4,5 | |

**TECHNICAL FIELDS SEARCHED (IPC)**

G05B

The present search report has been drawn up for all claims

| Place of search | Date of completion of the search | Examiner |
|---|---|---|
| The Hague | 25 September 2018 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 6743

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2018

| Patent document cited in search report | | Publication date | Patent family member(s) | | Publication date |
|---|---|---|---|---|---|
| WO 2015125747 | A1 | 27-08-2015 | TW 201543188 A<br>US 2015241865 A1<br>WO 2015125747 A1 | | 16-11-2015<br>27-08-2015<br>27-08-2015 |
| EP 3173883 | A1 | 31-05-2017 | CN 106873506 A<br>EP 3173883 A1<br>JP 2017102617 A<br>US 2017153614 A1 | | 20-06-2017<br>31-05-2017<br>08-06-2017<br>01-06-2017 |

EPO FORM P0459

For more details about this annex : see Official Journal of the European Patent Office, No. 12/82

**EP 3 432 102 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120095599 A